# EUROPEAN PATENT APPLICATION

(11) **EP 4 642 071 A1**
(43) Date of publication of application: **29.10.2025**
(21) Application number: 23915806.6
(22) Date of filing: 25.12.2023
(51) Int. Cl.: H04W 12/06

(54) **AUTHENTICATION METHOD AND COMMUNICATION APPARATUS**

(30) Priority: 09.01.2023 CN 202310028942
(71) Applicant: Huawei Technologies Co., Ltd., Shenzhen, Guangdong 518129 (CN)
(72) Inventor: LIU, Wenfeng, Shenzhen, Guangdong 518129 (CN); LI, He, Shenzhen, Guangdong 518129 (CN); WU, Rong, Shenzhen, Guangdong 518129 (CN)
(74) Representative: Goddar, Heinz J.
(86) International application number: PCT/CN2023/141590
(87) International publication number: WO 2024/149053

(57) **Abstract**

This application provides an authentication method and a communication apparatus, to resolve a communication interruption problem, thereby improving communication efficiency and communication reliability. The method and the apparatus may be applied to a communication system. The method includes: When user equipment UE moves from a source trusted non-3rd generation partnership project 3GPP access point TNAP to a target TNAP, a trusted non-3GPP gateway function TNGF generates an intermediate key based on a stored root key corresponding to the UE, and generates a target key for the target TNAP by using the intermediate key; and sends the target key to the target TNAP. The target key is used to protect communication security between the UE and the target TNAP.

## Description

This application claims priority to Chinese Patent Application No. 202310028942.X, filed with the China National Intellectual Property Administration on January 9, 2023 and entitled "AUTHENTICATION METHOD AND COMMUNICATION APPARATUS", which is incorporated herein by reference in its entirety.

### TECHNICAL FIELD

This application relates to the communication field, and in particular, to an authentication method and a communication apparatus.

### BACKGROUND

User equipment (user equipment, UE), such as a terminal device, may be registered with a core network via a 3rd generation partnership project (3rd generation partnership project, 3GPP) access network or a trusted non-3GPP access network (trusted non-3GPP access network, TNAN).

Currently, 3GPP does not support mobility of UE between different trusted non-3GPP access points (trusted non-3GPP access point, TNAP) in a same trusted non-3GPP access network. For communication security, when the UE accesses a network via each of different TNAPs, a complete authentication procedure needs to be performed, to obtain a key for establishing a secure connection between the UE and the TNAP. Based on this, when the UE is handed over from a TNAP 1 that has established a communication connection to the UE to a TNAP 2 that has not established a communication connection to the UE, a complete authentication procedure also needs to be performed, to obtain a key for establishing a secure connection between the UE and the TNAP 2. The authentication procedure between the UE and the TNAP requires information exchange between the UE, the trusted non-3GPP access point (trusted non-3GPP access point, TNAP), a trusted non-3GPP gateway function (trusted non-3GPP gateway function, TNGF) network element, an access and mobility management function (core access and mobility management function, AMF) network element, and an authentication server function (authentication server function, AUSF) network element, to complete the authentication procedure, resulting in a complex interaction procedure. Consequently, a service of the UE is interrupted.

Therefore, how to improve efficiency of generating the key between the UE and the TNAP 2 in this scenario becomes an urgent problem to be resolved.

### SUMMARY

Embodiments of this application provide an authentication method and a communication apparatus, to resolve a problem that a service of UE is interrupted, thereby improving communication efficiency and reliability.

To achieve the foregoing objective, the following technical solutions are used in this application.

According to a first aspect, an authentication method is provided. The authentication method includes: When user equipment UE moves from a source trusted non-3rd generation partnership project 3GPP access point TNAP to a target TNAP, a trusted non-3GPP gateway function TNGF generates an intermediate key based on a stored root key. The TNGF generates a target key for the target TNAP by using the intermediate key. In addition, the TNGF sends the target key to the target TNAP. The target key is used to protect communication security between the UE and the target TNAP.

Based on the authentication method provided in the first aspect, when the UE is handed over from the source TNAP to the target TNAP, the TNGF may generate the intermediate key based on the stored root key corresponding to the UE, generate the target key for the target TNAP, and send the target key to the target TNAP, to perform secure communication between the UE and the TNAP. In this way, in a case of TNAP handover, the target key is generated based on the root key that corresponds to the UE and that is stored in the TNGF, so that execution of a complete authentication procedure can be avoided, that is, an interaction procedure can be simplified, thereby improving communication efficiency and reliability.

In a possible design solution, that the TNGF generates the intermediate key based on the stored root key corresponding to the UE may include: The TNGF generates the intermediate key based on a first usage type distinguisher and the root key. The first usage type distinguisher is used to identify the generated intermediate key.

In a possible design solution, before the TNGF generates the target key for the target TNAP by using the intermediate key, the method provided in the first aspect may include: The TNGF sends an authentication request message to the UE through the target TNAP. The authentication request message may include a first verification parameter and a first freshness parameter. The first verification parameter is generated by the TNGF based on the intermediate key and the first freshness parameter. The TNGF receives an authentication response message from the UE. The authentication response message includes a second verification parameter and a second freshness parameter. The TNGF obtains a third verification parameter based on the intermediate key and the second freshness parameter. That the TNGF generates the target key for the target TNAP by using the intermediate key may include: When the third verification parameter matches the second verification parameter, the TNGF generates the target key for the target TNAP by using the intermediate key. In this way, an identity of the UE is verified by using the first verification parameter and the second verification parameter, so that access of unauthorized UE can be avoided, thereby further improving communication security.

In a possible design solution, before the TNGF generates the target key for the target TNAP by using the intermediate key, the method provided in the first aspect may include: The TNGF sends an authentication request message to the UE through the target TNAP. The authentication request message may include a first verification parameter and a first freshness parameter. The first verification parameter is generated by the TNGF based on the root key and the first freshness parameter. The TNGF receives an authentication response message from the UE. The authentication response message may include a second verification parameter and a second freshness parameter. The TNGF obtains a third verification parameter based on the root key and the second freshness parameter. That the TNGF generates the target key for the target TNAP by using the intermediate key may include: When the third verification parameter matches the second verification parameter, the TNGF generates the target key for the target TNAP by using the intermediate key. In this way, an identity of the UE is verified by using the first verification parameter and the second verification parameter, so that access of unauthorized UE can be avoided, thereby further improving communication security.

In a possible design solution, after the TNGF generates the target key for the target TNAP by using the intermediate key, and before the TNGF sends the target key to the target TNAP, the method provided in the first aspect may further include: The TNGF sends an authentication request message to the UE through the target TNAP. The authentication request message may include a first verification parameter and a first freshness parameter. The first verification parameter is generated by the TNGF based on the intermediate key and the first freshness parameter. The TNGF receives an authentication response message from the UE, where the authentication response message includes a second verification parameter and a second freshness parameter. The TNGF obtains a third verification parameter based on the intermediate key and the second freshness parameter. That the TNGF sends the target key to the target TNAP may include: When the third verification parameter matches the second verification parameter, the TNGF sends the target key to the target TNAP. In this way, an identity of the UE is verified by using the first verification parameter and the second verification parameter, so that access of unauthorized UE can be avoided, thereby further improving communication security.

In a possible design solution, after the TNGF generates the target key for the target TNAP by using the intermediate key, and before the TNGF sends the target key to the target TNAP, the method provided in the first aspect may further include: The TNGF sends an authentication request message to the UE through the target TNAP, where the authentication request message may include a first verification parameter and a first freshness parameter. The first verification parameter is generated by the TNGF based on the root key and the first freshness parameter. The TNGF receives an authentication response message from the UE. The authentication response message may include a second verification parameter and a second freshness parameter. The TNGF obtains a third verification parameter based on the root key and the second freshness parameter. That the TNGF sends the target key to the target TNAP may include: When the third verification parameter matches the second verification parameter, the TNGF sends the target key to the target TNAP. In this way, an identity of the UE is verified by using the first verification parameter and the second verification parameter, so that access of unauthorized UE can be avoided, thereby further improving communication security.

In a possible design solution, before the TNGF generates the target key for the target TNAP by using the intermediate key, the method provided in the first aspect may further include: The TNGF sends an authentication request message #1 to the UE through the target TNAP, where the authentication request message #1 includes an identifier of the UE. The TNGF receives an authentication response message #1 from the UE. The authentication response message #1 may include a second verification parameter and a second freshness parameter. The TNGF obtains a third verification parameter based on the intermediate key and the second freshness parameter. That the TNGF generates the target key for the target TNAP by using the intermediate key may include: When the third verification parameter matches the second verification parameter, the TNGF generates the target key for the target TNAP by using the intermediate key. After the TNGF sends the target key to the target TNAP, the method provided in the first aspect may further include: The TNGF sends an authentication response request message #2 to the UE through the target TNAP, where the authentication response request message #2 includes a first verification parameter and a first freshness parameter. The first verification parameter is generated by the TNGF based on the intermediate key and the first freshness parameter. The TNGF receives an authentication response message #2 from the UE through the target TNAP, where the authentication response message #2 indicates the TNGF to send an authentication success message. In this way, an identity of the UE is verified by using the first verification parameter and the second verification parameter, so that access of unauthorized UE can be avoided, thereby further improving communication security.

In a possible design solution, before the TNGF generates the target key for the target TNAP by using the intermediate key, the method provided in the first aspect may further include: The TNGF sends an authentication request message #1 to the UE, where the authentication request message #1 includes an identifier of the UE. The TNGF receives an authentication response message #1 from the UE, where the authentication response message #1 includes a second verification parameter and a second freshness parameter. The TNGF obtains a third verification parameter based on the root key and the second freshness parameter. That the TNGF generates the target key for the target TNAP by using the intermediate key may include: When the third verification parameter matches the second verification parameter, the TNGF generates the target key for the target TNAP by using the intermediate key. After the TNGF sends the target key to the target TNAP, the method provided in the first aspect may further include: The TNGF sends an authentication request message #2 to the UE through the target TNAP, where the authentication request message #2 may include a first verification parameter and a first freshness parameter. The first verification parameter is generated by the TNGF based on the root key and the first freshness parameter. The TNGF receives an authentication response message #2 from the UE through the target TNAP, where the authentication response message #2 indicates the TNGF to send an authentication success message. In this way, an identity of the UE is verified by using the first verification parameter and the second verification parameter, so that access of unauthorized UE can be avoided, thereby further improving communication security.

In a possible design solution, that the TNGF generates the target key for the target TNAP by using the intermediate key may include: The TNGF generates the target key based on a second usage type distinguisher and the intermediate key. The second usage type distinguisher is used to identify the generated intermediate key.

In a possible design solution, before the TNGF generates the intermediate key based on the stored root key corresponding to the UE, the method provided in the first aspect may further include: The TNGF receives a first request message from the target TNAP. The TNGF determines, in response to the first request message, that an authentication procedure between the TNGF and the UE needs to be performed. In this way, the authentication procedure between the UE and the TNGF can be triggered by using the first request message.

Optionally, the first request message may include the identifier of the UE. The TNGF determines, based on the identifier of the UE, that the UE moves from the source TNAP to the target TNAP. For example, the identifier of the UE in the first request message is the same as an identifier of UE that has been connected to the source TNAP.

In a possible design solution, before the TNGF generates the intermediate key based on the stored root key corresponding to the UE, the method provided in the first aspect may further include: The TNGF determines the root key based on the identifier of the UE.

According to a second aspect, an authentication method is provided. The authentication method is applied to a scenario in which a communication apparatus moves from a source trusted non-3rd generation partnership project 3GPP access point TNAP to a target TNAP, and includes: The communication apparatus generates an intermediate key based on a root key between the communication apparatus and a trusted non-3GPP gateway function TNGF. The TNGF is a management network element of the source TNAP and the target TNAP, and the communication apparatus generates a target key for the target TNAP by using the intermediate key. The target key is used to protect communication security between the communication apparatus and the target TNAP.

Based on the authentication method provided in the second aspect, in a scenario in which the communication apparatus, such as UE, is handed over from the source TNAP to the target TNAP, the communication apparatus may generate the intermediate key based on the stored root key corresponding to the UE, and generate the target key for the target TNAP, for secure communication between the communication apparatus and the TNAP. In this way, in a case of TNAP handover of the communication apparatus, the target key is generated based on the root key that corresponds to the UE and that is stored in the TNGF, so that execution of a complete authentication procedure can be avoided, and an interaction procedure can be simplified, thereby improving communication efficiency and reliability.

It may be understood that, in this application, the communication apparatus in the second aspect may be a terminal device, or a chip (system) or another part or component that can be disposed in the terminal device. In other words, the authentication method in the second aspect may be performed by the terminal device, or may be performed by the chip (system) or the another part or component in the terminal device.

In a possible design solution, that the communication apparatus generates the intermediate key based on the root key between the communication apparatus and the TNGF may include: The communication apparatus generates the intermediate key based on a first usage type distinguisher and the root key. The first usage type distinguisher is used to identify the generated intermediate key.

In a possible design solution, before the communication apparatus generates the intermediate key based on the root key between the communication apparatus and the TNGF, the method provided in the second aspect may include: receiving an authentication request message from the TNGF through the target TNAP. The authentication request message may include a first verification parameter and a first freshness parameter. The first verification parameter is generated by the TNGF based on the intermediate key and the first freshness parameter. The communication apparatus obtains a fourth verification parameter by using the intermediate key and the first freshness parameter. When the fourth verification parameter matches the first verification parameter, the communication apparatus sends an authentication response message to the TNGF. The authentication response message may include a second verification parameter and a second freshness parameter.

In a possible design solution, before the communication apparatus generates the intermediate key based on the root key between the communication apparatus and the TNGF, the method provided in the second aspect may include: The communication apparatus receives an authentication request message from the TNGF through the target TNAP. The authentication request message may include a first verification parameter and a first freshness parameter. The first verification parameter is generated by the TNGF based on the root key and the first freshness parameter. The communication apparatus obtains a fourth verification parameter by using the root key and the first freshness parameter. When the fourth verification parameter matches the first verification parameter, the communication apparatus sends an authentication response message to the TNGF. The authentication response message may include a second verification parameter and a second freshness parameter.

In a possible design solution, before the communication apparatus generates the intermediate key based on the root key between the communication apparatus and the TNGF, the method provided in the second aspect may include: The communication apparatus receives an authentication request message from the TNGF through the target TNAP. The authentication request message may include a first verification parameter and a first freshness parameter. The first verification parameter is generated by the TNGF based on the root key and the first freshness parameter. The communication apparatus obtains a fourth verification parameter by using the intermediate key and the first freshness parameter. That the communication apparatus generates the intermediate key based on the root key between the communication apparatus and the TNGF may include: When the fourth verification parameter matches the first verification parameter, the communication apparatus generates the intermediate key based on the root key between the communication apparatus and the TNGF. After the communication apparatus generates the target key for the target TNAP by using the intermediate key, the method may further include: The communication apparatus sends an authentication response message to the TNGF. The authentication response message may include a second verification parameter and a second freshness parameter.

In a possible design solution, before the communication apparatus generates the intermediate key based on the root key between the communication apparatus and the TNGF, the method provided in the second aspect may include: The communication apparatus receives an authentication request message from the TNGF through the target TNAP. The authentication request message may include a first verification parameter and a first freshness parameter. The first verification parameter is generated by the TNGF based on the root key and the first freshness parameter. The communication apparatus obtains a fourth verification parameter by using the root key and the first freshness parameter. That the communication apparatus generates the intermediate key based on the root key between the communication apparatus and the TNGF may include: When the fourth verification parameter matches the first verification parameter, the communication apparatus generates the intermediate key based on the root key between the communication apparatus and the TNGF. After the communication apparatus generates the target key for the target TNAP by using the intermediate key, the method provided in the second aspect may further include: The communication apparatus sends an authentication response message to the TNGF. The authentication response message may include a second verification parameter and a second freshness parameter.

In a possible design solution, that the communication apparatus generates the target key for the target TNAP by using the intermediate key may include: The communication apparatus generates the target key based on a second usage type distinguisher and the intermediate key. The second usage type distinguisher is used to identify the generated target key.

Optionally, before the communication apparatus generates the intermediate key based on the root key between the communication apparatus and the TNGF, the method provided in the second aspect may further include: The communication apparatus sends a first request message to the target TNAP. Further, the first request message may include an identifier of the communication apparatus.

In a possible design solution, before the communication apparatus generates the intermediate key based on the root key between the communication apparatus and the TNGF, the method further includes: The communication apparatus determines the root key based on an identifier of the TNGF.

According to a third aspect, a communication apparatus is provided. The communication apparatus includes modules configured to perform the authentication method according to any one of the first aspect, for example, a transceiver module and a processing module.

Optionally, the communication apparatus according to the third aspect may further include a storage module, and the storage module stores a program or instructions. When the processing module executes the program or the instructions, the communication apparatus is enabled to perform the authentication method according to the first aspect.

It should be noted that the communication apparatus according to the third aspect may be a network device such as a trusted non-3GPP gateway function, may be a chip (system) or another part or component that can be disposed in the network device, or may be an apparatus that includes the network device. This is not limited in this application.

In addition, for technical effects of the communication apparatus in the third aspect, refer to the technical effects of the authentication method in the first aspect. Details are not described herein again.

According to a fourth aspect, a communication apparatus is provided. The communication apparatus includes modules configured to perform the authentication method according to any one of the second aspect, for example, a transceiver module and a processing module.

Optionally, the communication apparatus according to the fourth aspect may further include a storage module, and the storage module stores a program or instructions. When the processing module executes the program or the instructions, the communication apparatus is enabled to perform the authentication method according to the second aspect.

It should be noted that the communication apparatus according to the fourth aspect may be a terminal device such as user equipment, or may be a chip (system) or another part or component that can be disposed in the terminal device. This is not limited in this application. The communication apparatus may also be referred to as user equipment.

In addition, for technical effects of the communication apparatus in the fourth aspect, refer to the technical effects of the authentication method in the second aspect. Details are not described herein again.

According to a fifth aspect, a communication apparatus is provided. The communication apparatus includes a processor. The processor is configured to perform the authentication method according to any one of the possible implementations of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory may be integrated with the processor, or may be separately disposed. The memory may be configured to store a computer program and/or data related to the authentication method according to either of the first aspect and the second aspect.

In addition, for technical effects of the communication apparatus according to the fifth aspect, refer to the technical effects of the authentication method according to any implementation of the first aspect or the second aspect. Details are not described herein again.

According to a sixth aspect, a communication apparatus is provided. The communication apparatus includes a processor. The processor is coupled to a memory, and the processor is configured to execute a computer program stored in the memory, so that the communication apparatus performs the authentication method according to any one of the possible implementations of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In addition, for technical effects of the communication apparatus according to the sixth aspect, refer to the technical effects of the authentication method according to any implementation of the first aspect or the second aspect.

According to a seventh aspect, a communication apparatus is provided, and includes a processor and a memory. The memory is configured to store a computer program, and when the processor executes the computer program, the communication apparatus is enabled to perform the authentication method according to any one of the implementations of the first aspect and the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In addition, for technical effects of the communication apparatus according to the seventh aspect, refer to the technical effects of the authentication method according to any implementation of the first aspect or the second aspect.

According to an eighth aspect, a communication apparatus is provided, including a processor. The processor is configured to: be coupled to a memory; and after reading a computer program in the memory, perform, based on the computer program, the authentication method according to any one of the implementations of the first aspect to the fifth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In addition, for technical effects of the communication apparatus according to the eighth aspect, refer to the technical effects of the authentication method according to any implementation of the first aspect or the second aspect.

According to a ninth aspect, a processor is provided. The processor is configured to perform the authentication method according to any one of the possible implementations of the first aspect to the fifth aspect.

According to a tenth aspect, a communication system is provided. The communication system includes one or more terminal devices and one or more network devices.

According to an eleventh aspect, a computer-readable storage medium is provided, including a computer program or instructions. When the computer program or the instructions are run on a computer, the computer is enabled to perform the authentication method according to any one of the possible implementations of the first aspect and the second aspect.

According to a twelfth aspect, a computer program product is provided, including a computer program or instructions. When the computer program or the instructions are run on a computer, the computer is enabled to perform the authentication method according to any one of the possible implementations of the first aspect and the second aspect.

### BRIEF DESCRIPTION OF DRAWINGS

FIG. 1 is a diagram of an architecture of a core network according to an embodiment of this application;
FIG. 2 is a diagram of an architecture of a communication system according to an embodiment of this application;
FIG. 3A and FIG. 3B are a schematic flowchart 1 of an authentication method according to an embodiment of this application;
FIG. 4 is a diagram 1 of target key generation according to an embodiment of this application;
FIG. 5 is a diagram 2 of target key generation according to an embodiment of this application;
FIG. 6A and FIG. 6B are a schematic flowchart 2 of an authentication method according to an embodiment of this application;
FIG. 7A and FIG. 7B are a schematic flowchart 3 of an authentication method according to an embodiment of this application;
FIG. 8A and FIG. 8B are a schematic flowchart 4 of an authentication method according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

For ease of understanding, the following first describes technical terms in embodiments of this application.

1. 5th generation (5th generation, 5G) mobile communication system (referred to as a 5G system (5G system, 5GS) for short):

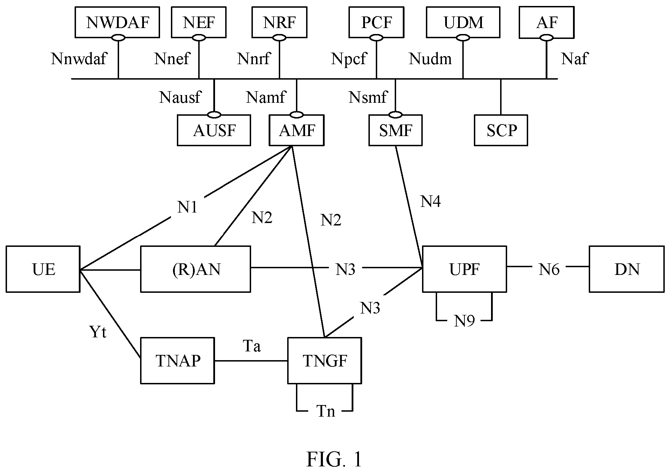

FIG. 1 is a diagram of an architecture of a 5GS. As shown in FIG. 1, the 5GS includes an access network (access network, AN) and a core network (core network, CN), and may further include a terminal device.

The CN may include a user plane function (user plane function, UPF) network element (user plane network element for short), an access and mobility management function (core access and mobility management function, AMF) network element, a session management function (session management function, SMF) network element (session management network element for short), an authentication server function (authentication server function, AUSF) network element, a trusted non-3GPP access point (trusted non-3GPP access point, TNAP), a trusted non-3GPP gateway function (trusted non-3GPP gateway function, TNGF) network element, a network data analytics function (network data analytics function, NWDAF) network element (network data analytics network element for short), a network exposure function (network exposure function, NEF) network element, a network repository function (network exposure function Repository Function, NRF) network element, a policy control function (policy control function, PCF) network element (policy control network element for short), a unified data management (unified data management, UDM) network element (data management network element for short), an application function (application function, AF) network element, a service communication proxy (service communication proxy, SCP) network element, or the like.

It should be noted that FIG. 1 merely provides some examples of network elements or entities in the 5G network. The 5G network may further include some network elements or entities that are not shown in FIG. 1, such as a unified data repository (unified data repository, UDR) network element, a network slice selection function (network slice selection function, NSSF) network element, and a charging function (charging function, CHF) network element. This is not specifically limited in embodiments of this application.

As shown in FIG. 1, the terminal device accesses the 5G network through an AN device, and the terminal device communicates with the AMF network element through an N1 interface (N1 for short). The RAN device communicates with the AMF network element through an N2 interface (N2 for short). The terminal device communicates with the TNAP through a Yt interface, and the TNAP communicates with the TNGF network element through a Ta interface. The TNGF network element communicates with the AMF network element through an N2 interface. The TNGF network element further communicates with the UPF network element through an N3 interface. The RAN device communicates with the UPF network element through an N3 interface (N3 for short). The SMF network element communicates with the UPF network element through an N4 interface (N4 for short), and the UPF network element accesses a data network (data network, DN) through an N6 interface (N6 for short). In addition, control plane functions such as the AUSF network element, the AMF network element, the SMF network element, the NEF network element, the NRF network element, the PCF network element, the UDM network element, the UDR network element, the AF network element, the NWDAF network element, or the SCP network element shown in FIG. 1 interact with each other through a service-based interface. For example, a service-based interface provided by the AUSF network element externally is Nausf, a service-based interface provided by the AMF network element externally is Namf, a service-based interface provided by the SMF network element externally is Nsmf, a service-based interface provided by the NEF network element externally is Nnef, a service-based interface provided by the NRF network element externally is Nnrf, a service-based interface provided by the PCF network element externally is Npcf, a service-based interface provided by the UDM network element externally is Nudm, and a service-based interface provided by the AF network element externally is Naf. In addition, a service-based interface provided by the UDR network element externally is Nudr, a service-based interface provided by the NSSF network element externally is Nnssf, and a service-based interface provided by the CHF network element externally is Nchf. For related function descriptions and interface descriptions, refer to a diagram of a 5G system architecture (5G system architecture) in the 23501 standard. Details are not described herein.

The following separately describes examples of functions of the parts or network elements in the foregoing network architecture in the 5G network.
(1) A terminal may be a terminal having sending and receiving functions, or a chip or a chip system that can be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.
(2) An AN network element is configured to implement an access-related function, may provide a network access function for an authorized terminal in a specific area, and can use transmission tunnels of different quality based on a terminal level, a service requirement, and the like. The AN network element forwards a control signal and user data between a terminal and a CN. The AN network element in this application may be a radio access network (radio access network, RAN) network element. The RAN network element can manage a radio resource and provide an access service for a terminal device, to forward a control signal and terminal data between the terminal and a core network. The RAN network element may also be understood as a base station in a conventional network. For example, the RAN network element may be responsible for functions such as radio resource management, quality of service (quality of service, QoS) management, and data compression and encryption on an air interface side.

The RAN network element may be a device in a wireless network. The RAN network element may also be referred to as a wireless RAN network element, a network device, or a wireless network node. Currently, some examples of the RAN network element are: a next generation NodeB (The Next Generation NodeB, gNB) in a 5G system, a transmission reception point (transmission reception point, TRP), an evolved NodeB (evolved NodeB, eNB) in a long term evolution (long term evolution, LTE) system, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. In a network structure, a network device may include a central unit (central unit, CU) node, a distributed unit (distributed unit, DU) node, or a RAN network element including a CU node and a DU node. The RAN network element may alternatively be a wireless backhaul device, a vehicle-mounted device, a wearable device, a network device in a future 5G network, a network device in a future evolved PLMN, or the like. In a 3rd generation (3rd generation, 3G) system, the RAN network element is referred to as a NodeB (NodeB) or the like.

(3) A mobility management network element is a core network element, and is mainly responsible for signaling processing, for example, functions such as access control, mobility management, attachment and detachment, and gateway selection. When serving a session of a terminal, the mobility management network element provides control plane storage resources for the session, to store a session identifier, an SMF network element identifier associated with the session identifier, and the like. In a 5G communication system, the mobility management network element may be an access and mobility management function (access and mobility management function, AMF) network element. In a future communication system, the mobility management network element may still be an AMF network element, or may have another name. This is not limited in this application.

(4) A session management network element is configured to perform session management in a mobile network, for example, responsible for user plane network element selection, user plane network element redirection, internet protocol (internet protocol, IP) address allocation, bearer establishment, modification, and release, QoS control, session management, IP address allocation and management of a terminal, selection of an endpoint that can manage a user plane function interface and a policy control and charging function interface, downlink data notification, and the like. In a 5G communication system, the session management network element may be an SMF network element. In a future communication system, the session management network element may still be an SMF network element, or may have another name. This is not limited in this application.

(5) A user plane network element is used for packet routing and forwarding, quality of service (quality of service, QoS) handling for user plane data, and the like. In a 5G communication system, a network element or an entity corresponding to the user plane network element may be a user plane function (user plane function, UPF) network element in a 5G network architecture. In a future communication system, the user plane network element may still be a UPF network element, or the user plane network element has another name. This is not limited in embodiments of this application.

(6) An authentication server function network element mainly provides an authentication function, and supports authentication of 3rd generation partnership project (3rd generation partnership project, 3GPP) access and non-3GPP access. For details, refer to 3GPP TS 33.501. In a 5G communication system, the authentication server function network element may be an authentication server function (authentication server function, AUSF) network element. In a future communication system, the authentication server function network element may still be an AUSF network element, or the authentication server function network element has another name. This is not limited in embodiments of this application.

(7) A TNAP is configured to provide an access function for UE.

(8) A TNGF network element is configured to serve as a gateway of a trusted non-3GPP access network.

(9) A data management network element is configured to perform user identifier processing, access authentication, registration, mobility management, or the like. In a 5G communication system, a network element or an entity corresponding to the data management network element may be a unified data management (unified data management, UDM) network element in a 5G network architecture. Nudm is a service-based interface provided by the UDM network element, and the UDM network element may communicate with another network function through Nudm. In a future communication system, the data management network element may still be a UDM network element, or the data management network element has another name. This is not limited in embodiments of this application.

(10) A network exposure function network element mainly provides a service, to enable a 3rd generation partnership project (3rd generation partnership project, 3GPP) network to securely provide a network service capability for a third-party service provider, namely, an application function network element 207. In a 5G communication system, the network exposure function network element may be a network exposure function (network exposure function, NEF) network element, Nnef is a service-based interface provided by the NEF network element, and the NEF network element may communicate with another network function through Nnef. In a future communication system, the network exposure function network element may still be an NEF network element or have another name. This is not limited in embodiments of this application.

(11) A policy control network element includes a user subscription data management function, a policy control function, a charging policy control function, QoS control, and the like, is a unified policy framework used to govern network behavior, and provides policy rule information and the like for a control plane function network element (for example, an AMF network element). In a 5G communication system, the policy control network element may be a PCF network element. In a future communication system, the policy control function network element may still be a PCF network element or have another name. This is not limited in embodiments of this application.

(12) An application function network element is mainly configured to provide application layer information for a 3GPP network. In a 5G communication system, the application function network element 207 may be an application function (application function, AF) network element, Naf is a service-based interface provided by the AF network element, and the AF network element may communicate with another network function through Naf. In a future communication system, the application function network element may still be an AF network element or have another name. This is not limited in embodiments of this application. For example, the AF network element may include a service capability server (services capability server, SCS) or an application server (application server, AS).

(13) A data network is a network that provides a data transmission service for a terminal, such as an IMS (IP Multimedia Service, IP multimedia service) or the Internet.

The terminal accesses the data network by establishing a PDD session from the terminal to a RAN network element to a UPF network element to a DN network element.

(14) A network data analytics function network element is configured to provide network data collection and analysis functions based on technologies such as big data and artificial intelligence. In a 5G system, the network data analytics function network element may be an NWDAF network element. In a future communication system, the network data analytics function network element may still be an NWDAF network element or have another name. This is not limited in this application.

(15) A slice selection function network element is configured to select a network slice for a terminal, and the like. In a 5G communication system, the slice selection function network element may be an NSSF network element. In a future communication system, the network slice selection function network element may still be an NSSF network element or have another name. This is not limited in embodiments of this application.

(16) A unified data repository network element is mainly responsible for storing structured data. Stored content includes subscription data and policy data, externally exposed structured data, and application-related data. In a 5G communication system, the unified data repository network element may be a UDR network element. In a future communication system, the unified data repository network element may still be a UDR network element or have another name. This is not limited in this application.

It should be noted that in the following embodiments, the TNGF network element is referred to as a TNGF for short, the AMF network element is referred to as an AMF for short, the AUSF network element is referred to as an AUSF for short, the UPF network element is referred to as a UPF for short, and the terminal device is described by using UE. Details are not described subsequently.

UE may be registered with a core network via a 3rd generation partnership project (3rd generation partnership project, 3GPP) access network or a trusted non-3GPP access network (trusted non-3GPP access network, TNAN).

Currently, 3GPP does not support mobility of UE between different trusted non-3GPP access points (trusted non-3GPP access point, TNAP) in a same trusted non-3GPP access network. For communication security, when the UE accesses a network via each of different TNAPs, a complete authentication procedure needs to be performed, to obtain a key for establishing a secure connection between the UE and the TNAP. Based on this, when the UE is handed over from a TNAP 1 that has established a communication connection to the UE to a TNAP 2 that has not established a communication connection to the UE, a complete authentication procedure also needs to be performed, to obtain a key for establishing a secure connection between the UE and the TNAP 2. The authentication procedure between the UE and the TNAP requires information exchange between the UE, the trusted non-3GPP access point (trusted non-3GPP access point, TNAP), a trusted non-3GPP gateway function (trusted non-3GPP gateway function, TNGF), an access and mobility management function (core access and mobility management function, AMF), and an authentication server function (authentication server function, AUSF), to complete the authentication procedure, resulting in a complex interaction procedure. Consequently, a service of the UE is interrupted.

Therefore, how to improve efficiency of generating the key between the UE and the TNAP 2 in this scenario becomes an urgent problem to be resolved.

In conclusion, for the foregoing technical problem, embodiments of this application provide the following technical solutions, to avoid a problem that a communication procedure is interrupted during TNAP handover of UE, so as to improve communication efficiency and communication reliability. The solutions in embodiments of this application are briefly described below. In embodiments of this application, when a TNAP is changed from a source TNAP to a target TNAP, a TNGF may generate an intermediate key based on a stored root key corresponding to UE, generate a target key for the target TNAP based on the intermediate key, and send the target key to the target TNAP. The UE may also store a root key corresponding to the TNGF, generate an intermediate key, and then generate the target key for the target TNAP based on the intermediate key. In this way, the UE and the TNGF each may generate the target key based on the stored root key. This can avoid execution of a complete authentication procedure during TNAP handover of the UE, that is, an interaction procedure can be simplified, thereby improving communication efficiency and reliability.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

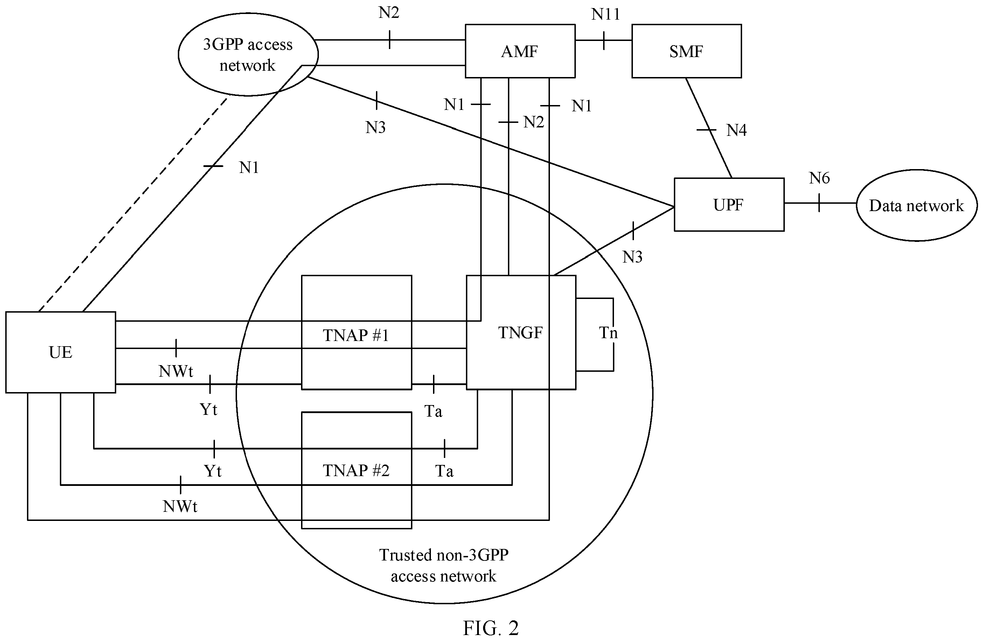

For ease of understanding of embodiments of this application, a communication system shown in FIG. 2 is used as an example to first describe in detail a communication system applicable to embodiments of this application. For example, FIG. 2 is a diagram of an architecture of a communication system to which an authentication method according to an embodiment of this application is applicable.

As shown in FIG. 2, the communication system includes UE, a 3GPP access network, a trusted non-3GPP access network (trusted non-3GPP access network, TNAN), and an AMF.

The UE may perform 3GPP access via the 3GPP access network, and the UE may perform non-3GPP access via the TNAN. The TNAN includes a TNAP #1, a TNAP #2, and a TNGF. For example, the UE may be communicatively connected to the TNAP #1 through a Yt interface, and the UE may be communicatively connected to the TNGF through an NWt interface. The UE may further be communicatively connected to the AMF through an N1 interface. The UE may be communicatively connected to the TNAP #2 through a Yt interface, and the UE may be communicatively connected to the TNGF through an NWt interface. The UE may further be communicatively connected to the AMF through an N1 interface. In this case, the TNGF is a management network element of the TNAP #1 and the TNAP #2. That the TNGF is a management network element of a TNAP means that the TNGF establishes a connection to the TNAP, and the TNGF generates a key used to establish secure communication between the TNAP and the UE, and sends the key to the TNAP.

In addition, the communication system shown in FIG. 2 may further include an SMF, a UPF, and a data network.

The SMF and the AMF may communicate with each other through an N11 interface, the UPF and the SMF may be communicatively connected through an N4 interface, the UPF and the TNGF may be communicatively connected through an N3 interface, and the data network and the UPF may be communicatively connected through an N6 interface. The 3GPP access network may be communicatively connected to the AMF through an N2 interface. The 3GPP access network may include a RAN.

It should be noted that the authentication method provided in embodiments of this application is applicable between the UE, the TNAP #1, the TNAP #2, and the TNGF shown in FIG. 2. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 2 is merely a simplified diagram of an example for ease of understanding. The communication system may further include another network device such as an AUSF, which is not shown in FIG. 2.

The following separately describes the solutions provided in embodiments of this application with reference to various scenarios to which embodiments of this application are applied. In the following embodiments, the TNAP #1 is used as a source TNAP and the TNAP #2 is used as a target TNAP for description.

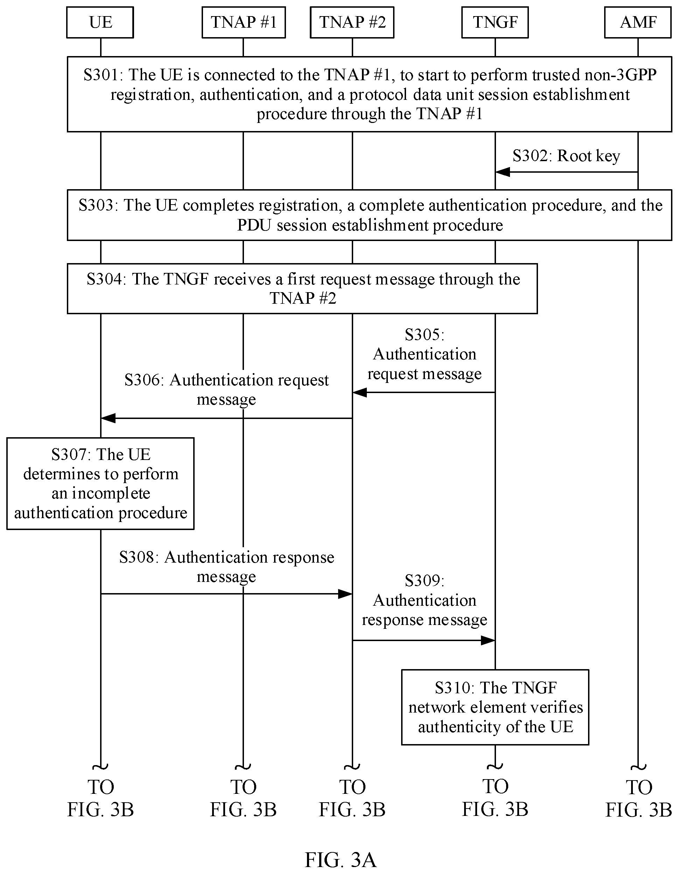

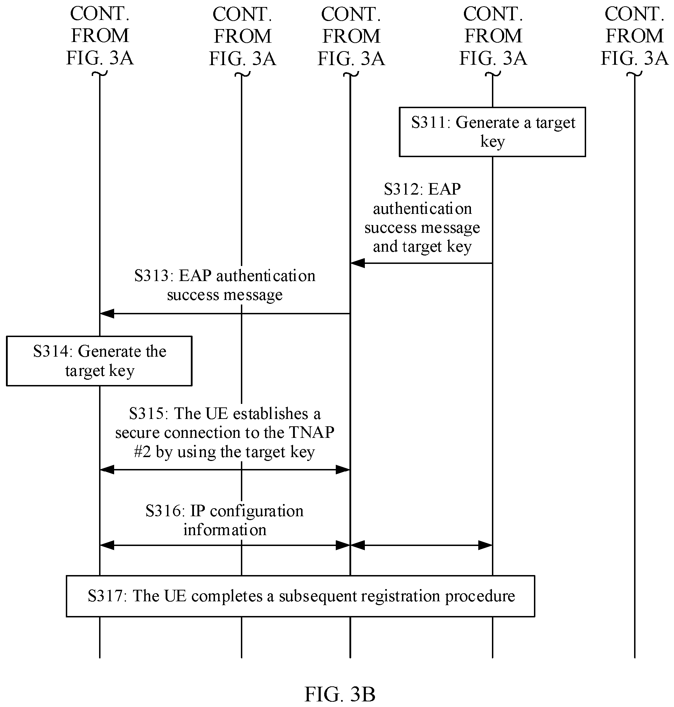

For example, FIG. 3A and FIG. 3B are a schematic flowchart 1 of an authentication method according to an embodiment of this application. The authentication method is mainly applicable to a case in which UE is handed over between TNAPs in a same TNGF, and after completing identity authentication on a peer device, the TNGF and the UE each determine a key K_{TNAP} used for communication between the UE and a TNAP after handover. For example, when the UE is handed over from the TNAP #1 to the TNAP #2 that are connected to the same TNGF, a key K_{TNAP} used for communication security between the UE and the TNAP #2 is determined. The following describes a communication procedure of the authentication method shown in FIG. 3A and FIG. 3B based on the TNAP #1 and the TNAP #2 with reference to the UE.

S301: The UE is connected to the TNAP #1, to start to perform trusted non-3GPP registration, authentication, and a protocol data unit (protocol data unit, PDU) session establishment procedure through the TNAP #1.

It should be noted that, in a process of performing S301, two authentication procedures are included, and the two authentication procedures respectively include a first authentication procedure, that is, a primary authentication procedure (which is referred to as a primary authentication procedure below unless otherwise specified), and a second authentication procedure. In the primary authentication procedure, an authentication server (authentication server) is an AUSF, an authenticator (authenticator) is an AMF, and a party on which authentication is performed is the UE. A method used in the primary authentication procedure is extensible authentication protocol (extensible authentication protocol, EAP)-authentication and key agreement' (authentication and key management', AKA'), that is, an EAP-AKA' method, or a 5G-AKA method. Details are not described herein. In the second authentication procedure, an authentication server is the TNGF, an authenticator is the TNAP #1, and a party on which authentication is performed is the UE. A relationship between time for performing the primary authentication procedure and time for performing the second authentication procedure is as follows: The UE first triggers the second authentication procedure, and in an execution process of the second authentication procedure, the AMF triggers the first authentication procedure. The second authentication procedure is completed only after the first authentication procedure is successfully completed. An authentication procedure in which the first authentication procedure and the second authentication procedure are completely performed may be referred to as a complete authentication procedure. An authentication procedure in which only the second authentication procedure is performed and the first authentication procedure is not performed in an execution process of the second authentication procedure is referred to as an incomplete authentication procedure. This embodiment provides a method for the incomplete authentication procedure. Optionally, information exchanged in S301 may include an identifier of the UE. The identifier of the UE may be a 5G globally unique temporary identity (SG-globally unique temporary UE identity, 5G-GUTI) and/or a subscription concealed identifier (subscription concealed identifier, SUCI). A format of the identifier of the UE is a network access identifier (network access identifier, NAI) format, for example, a username@realm format.

For a specific implementation of S301, refer to a procedure defined in section 7.2A.2.1 in version 17.7.0 of protocol version TS 33.501. Details are not described herein.

S302: The AMF sends a root key to the TNGF. Correspondingly, the TNGF receives the root key from the AMF.

The root key may be carried in an N2 initial context setup request message.

For a specific implementation principle of S302, refer to related descriptions in 7A.2.1 in version 17.7.0 of protocol version TS 33.501. Details are not described herein.

S303: The UE completes registration, a complete authentication procedure, and the PDU session establishment procedure.

In this process, the UE establishes a connection to the TNAP #1.

An information element in S303 may include an initial identity (initiator identifier, IDi) and an initial identity (responser Identifier, IDr). The IDi may include a 5G-GUTI and/or an SUCI.

S303 includes the following steps: Step 1a: The TNGF generates a root key K_{TNGF}, and generates K_{TNAP1} for the TNAP #1 by using K_{TNGF}.

Step 2a: The TNGF sends K_{TNAP1} to the TNAP #1. Correspondingly, the TNAP #1 receives K_{TNAP1} from the TNGF.

Step 3a: The UE generates the root key K_{TNGF}, and generates K_{TNAP1} for the TNAP #1 by using K_{TNGF}.

Step 4a: The UE establishes a secure connection to the TNAP #1 by using K_{TNAP1}.

For a specific implementation principle of S303, refer to a procedure defined in 7A.2.1 in version 17.7.0 of protocol version TS 33.501. Details are not described herein again.

S304: The TNGF receives a first request message through the TNAP #2.

For example, S304 includes: When the UE moves from the TNAP #1 to the TNAP #2, the TNGF receives the first request message through the TNAP #2.

In a possible design solution, the first request message may include the identifier of the UE. The first request message may be used to notify the TNGF that the UE moves from the TNAP #1 to the TNAP #2. The identifier of the UE may include the 5G-GUTI or the SUCI included by the UE in S301; the information element carried in S303, for example, the initial identity (initiator identifier, IDi); an identifier in the NAI format; an internet protocol (internet protocol, IP) address of the UE; or other identification information that can be used by the TNGF to identify an identity of the UE or used by the TNGF to determine that a root key that corresponds to the UE and that is stored in the TNGF (which is referred to as a key stored in the TNGF for short below) is the same as a root key stored in the UE (which is referred to as a root key stored in the UE for short below). The identifier of the UE is not specifically limited in this embodiment.

In this embodiment of this application, the first request message may be implemented in a plurality of different methods, for example, the following case 1.1 and case 1.2.

Case 1.1: The first request message may be generated by the TNAP #2. In this case, S304 may include: The TNAP #2 generates the first request message. A communication connection has been established between the UE and the TNAP #2. The TNAP #2 sends the first request message to the TNGF based on the communication connection.

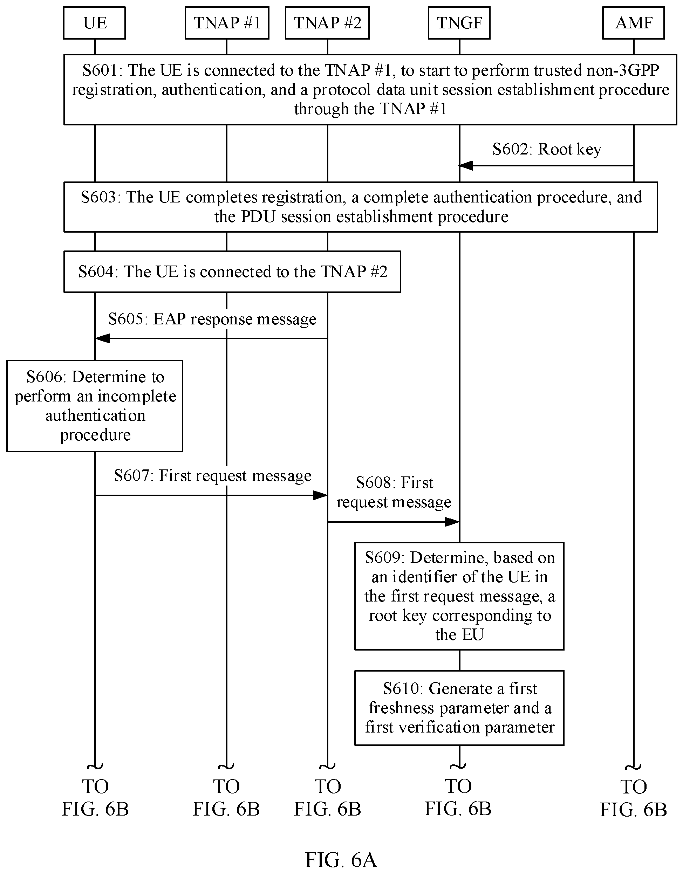

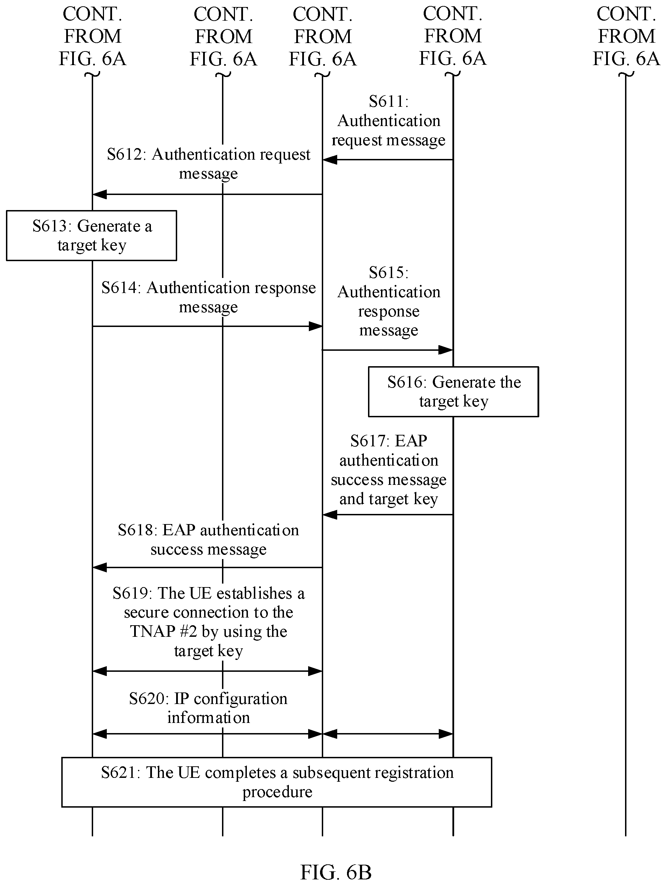

Case 1.2: The first request message is generated by the UE. In this case, S303 may include: The UE generates the first request message, and sends the first request message to the TNGF through the TNAP #2. Correspondingly, the TNGF receives the first request message from the TNAP #2. For an implementation principle of case 1.2, refer to S607 and S608 shown in FIG. 6A and FIG. 6B below.

For example, the first request message may be an EAP identity response message (EAP-RES/Identity) message, an EAP-RES/SG-NAS (non-access stratum) message, an EAP-RES/SG-ReAUTH (re-authentication) message, or an EAP-RES/ReAUTH message. A message name is not specifically limited in this embodiment.

For example, the first request message may be an EAP-RES/Identity message. This message is sent by the UE and carries the identifier of the UE. For example, the identifier of the UE is an identifier in the NAI format. The identifier in the NAI format may be the same as the identifier of the UE included by the UE in S301.

S305: The TNGF sends an authentication request message to the TNAP #2 in response to the first request message. Correspondingly, the TNAP #2 receives the authentication request message from the TNGF.

The authentication request message includes a first verification parameter and a first freshness parameter.

The first freshness parameter is a random number generated by the TNGF or a counter value. This is not specifically limited in this embodiment.

Optionally, the authentication request message may further include an identifier of the TNGF.

The authentication request message is used to perform re-authentication on the UE when the UE is handed over between different TNAPs. The identifier of the TNGF may be one or more of the following: an IP address of the TNGF, an identity of the TNGF, the initial identity (responser Identifier, IDr) carried in S303, or identification information used by the UE to determine that the root key stored in the UE is the same as the root key that is stored in the TNGF and that corresponds to the UE.

The authentication request message may be an EAP-REQ/Restart message, an EAP-REQ/5G-Restart message, an EAP-REQ/5G-NAS message, an EAP-REQ/SG/Notification message, an EAP-REQ/5G-AN message, an EAP-REQ/SG-ReAUTH message, an EAP-REQ/ReAUTH message, or the like. A name of the authentication request message is not specifically limited in this embodiment.

Optionally, before the authentication request message is sent, the method provided in FIG. 3A and FIG. 3B may further include: The TNGF determines, in response to the first request message, to perform an incomplete authentication procedure. For example, the TNGF determines, based on information in the first request message, that authentication needs to be performed on the UE. In a possible implementation, if the first request message includes only an access network parameter (access network parameter, AN parameter), the TNGF determines to perform an incomplete authentication procedure. In another possible implementation, the first request message includes indication information indicating that an incomplete authentication procedure needs to be performed. In this case, the TNGF determines, based on the indication information carried in the first request message, to perform the incomplete authentication procedure. The indication information may be generated by the UE, or may be generated by the TNAP #1. This is not specifically limited in this embodiment. For example, the indication information may be indicated by using one or more bits (bit). In another possible implementation, the first request message includes the identifier of the UE. In this case, the TNGF may determine, based on the identifier of the UE in the first request message, that the TNGF stores a security context corresponding to the UE, and then determine to perform an incomplete authentication procedure.

After the TNGF determines to trigger the incomplete authentication procedure, the TNGF determines a root key based on the identifier of the UE in the first request message. The root key corresponds to the identifier of the UE, that is, the root key corresponding to the UE is determined. It may be understood that a first correspondence between different UE identifiers and different root keys may be stored or configured in the TNGF. The TNGF may determine, based on the identifier of the UE, the root key corresponding to the UE.

The root key may be a key such as K_{TNGF}, K_{TNAP}, or K_{TIPSec}. The root key is not specifically limited in this embodiment. A generation parameter may include at least one of the following: the identifier of the TNGF or the first freshness parameter. When the generation parameter includes the identifier of the TNGF, the authentication request message may further include the identifier of the TNGF.

For the UE, K_{TNGF} is generated by the UE when the UE accesses the TNGF through the TNAP #1. For the TNGF, K_{TNGF} is a key obtained by the TNGF from the AMF. K_{TNGF} is the same on a UE side and a TNGF side. K_{TNAP} is a key generated by each of the TNGF and the UE by using K_{TNGF} and a second usage type distinguisher. After generating K_{TNAP}, the TNGF sends K_{TNAP} to the TNAP. K_{TNAP} is used to establish a secure connection between the UE and the TNAP. For example, K_{TNAP} between the TNAP #1 and the UE may be K_{TNAP1}, and K_{TNAP1} is used to protect security establishment between the UE and the TNAP #1. K_{TIPSec} is a key that is generated by each of the TNGF and the UE by using K_{TNGF} and a third usage type distinguisher and that is used to establish IPsec. A usage type distinguisher is used to identify a type of a generated key, and the type of the generated key may also represent usage of the key. For example, the second usage type distinguisher represents that the generated key is used for the TNAP #2, that is, a target key. The third usage type distinguisher represents that the generated key is used for IPsec.

After determining the root key corresponding to the UE, the TNGF may obtain the first verification parameter through calculation by using the root key corresponding to the UE, the generation parameter, and a generation algorithm.

There are a plurality of implementations in which the TNGF generates the first verification parameter by using the root key corresponding to the UE. The following provides descriptions with reference to manner 1 and manner 2.

Manner 1: The TNGF generates an intermediate key by using the root key corresponding to the UE, and then generates the first verification parameter by using the intermediate key. For example, if the root key corresponding to the UE is K_{TNGF}, the TNGF generates an intermediate key K_{TNGF}' by using K_{TNGF}, and then generates the first verification parameter by using K_{TNGF}'. A procedure in which the TNGF generates the intermediate key by using the root key corresponding to the UE may be performed before S304 is performed. For example, the intermediate key may be generated before S304 is performed and after the root key corresponding to the UE is generated, or may be generated after the TNGF determines to trigger an incomplete authentication procedure. Specific generation time is not limited in this embodiment. For example, the TNGF may obtain the first verification parameter through calculation based on the root key corresponding to the UE, the IP address of the TNGF, and the first freshness parameter. Alternatively, the TNGF may obtain the first verification parameter through calculation based on the root key corresponding to the UE and the identity of the TNGF. Alternatively, the TNGF may obtain the first verification parameter through calculation based on the root key corresponding to the UE and the random number generated by the TNGF.

Manner 2: The TNGF directly generates the first verification parameter by using the root key corresponding to the UE. For example, the TNGF may generate the first verification parameter by using the root key corresponding to the UE and a generation algorithm. The generation algorithm may be referred to as a key derivation function (key derivation function, KDF), and the generation algorithm may be a hash-based message authentication code (hash-based message authentication code, HMAC) method, for example, a hash-based message authentication code (hash-based message authentication code, HMAC)-secure hash algorithm (secure hash algorithm, SHA)-256. The specific HMAC method is not limited in this embodiment.

For example, the TNGF may generate the intermediate key based on the root key corresponding to the UE, and obtain the first verification parameter through calculation by using the intermediate key, the IP address of the TNGF, and the first freshness parameter. Alternatively, the TNGF may generate the intermediate key based on the root key corresponding to the UE, and obtain the first verification parameter through calculation by using the intermediate key and the identifier of the TNGF. Alternatively, the TNGF may generate the intermediate key based on the root key corresponding to the UE, and obtain the first verification parameter through calculation by using the intermediate key and the random number generated by the TNGF.

It should be noted that the generation parameter, for example, the first verification parameter and the first freshness parameter, may be carried in an EAP authentication success message for sending. In this case, S305 may not be separately performed. The UE may perform authentication on the TNGF based on the EAP authentication success message (EAP-success message) that carries the first verification parameter and the first freshness parameter.

S306: The TNAP #2 sends the authentication request message to the UE. Correspondingly, the UE receives the authentication request message from the TNAP #2.

For example, if the authentication request message in S306 is encapsulated in an authentication, authorization, and accounting (authentication, authorization, accounting, AAA) message, the TNAP #2 may decapsulate the AAA message to obtain the authentication request message, encapsulate the authentication request message into a layer 2 (layer, L2) message, and then send, to the UE, the L2 message in which the authentication request message is encapsulated.

S307: The UE determines to perform an incomplete authentication procedure.

For the incomplete authentication procedure, refer to related descriptions in S301. Details are not described herein again.

There are a plurality of implementations in which the UE determines to perform the incomplete authentication procedure. The following provides descriptions with reference to case 2.1 to case 2.3.

Case 2.1: If S305 and S306 are performed before S307, when the UE receives the authentication request message, the UE determines, based on content of the authentication request message, to perform the incomplete authentication procedure. For example, the UE is connected to only one TNGF at a same moment. Therefore, when the UE receives a message from the TNAP #2 and the message is related to authentication (for example, an EAP message), the UE may further determine, based on an authentication parameter carried in the message, to perform the incomplete authentication procedure.

Case 2.2: If S307 is performed before S304 to S306, or if S307 is a step in S304, when the UE determines to move from the TNAP #1 to the TNAP #2, and a TNGF configured to manage the TNAP #1 is the same as a TNGF configured to manage the TNAP #2, the UE determines to perform the incomplete authentication procedure. For example, if the UE determines, based on the identifier of the TNAP, that the UE moves from the TNAP #1 to the TNAP #2, and determines, based on TNGF information included by the TNAP #2, that the TNGF configured to manage the TNAP #1 is the same as the TNGF configured to manage the TNAP #2, the UE determines to perform the incomplete authentication procedure. The TNGF information may be the same as or different from a TNGF identifier. This is not specifically limited in this embodiment. Alternatively, after the UE determines to move from the TNAP #1 to the TNAP #2, the UE provides same realm or a same service set identifier (service set identifier, SSID), so that the TNAP #2 selects a same TNGF as the TNAP #1. For example, the UE receives an EAP-REQ/Identity message and TNGF information sent by the TNAP #2. If the UE determines, based on the TNGF information, that the TNGF does not change, the UE may send an EAP-RES/Identity message, and include the identifier of the UE in the message. In this case, the first request message in S304 is an EAP-RES/Identity message.

Case 2.3: The UE receives a message from the TNGF, and determines, based on the message, to perform the incomplete authentication procedure. For example, the UE may determine, based on a message name of the message, to perform the incomplete authentication procedure. In this case, the message name has an indication function, and the UE may determine a procedure based on different message names. For example, the UE stores a second correspondence between a message name and a procedure, and the UE may determine a procedure based on different message names and the second correspondence. That is, whether to perform the incomplete authentication procedure may be determined in an implicit manner, or whether to perform the incomplete authentication procedure is determined based on a pre-specified execution manner corresponding to the message. For another example, the UE may determine, based on a status of a parameter carried in the message from the TNGF, for example, whether indication information is carried, or another parameter that has an indication function, to perform the incomplete authentication procedure. When the message from the TNGF carries the indication information or the parameter that has the indication function, the UE may determine to perform the incomplete authentication procedure.

The message from the TNGF may be an EAP-REQ/Restart message, an EAP-REQ/5G-Restart message, an EAP-REQ/SG-NAS message, an EAP-RES/SG/Notification message, an EAP-REQ/5G-AN message, an EAP-REQ/SG-ReAUTH message, an EAP-REQ/ReAUTH message, or the like. A message name is not specifically limited in this embodiment.

When the UE receives the authentication request message from the TNAP #2, the authentication method provided in this embodiment of this application includes step 1a.

Step 1a: The UE may verify whether the first verification parameter is correct, that is, verify whether a fourth verification parameter matches the first verification parameter. In other words, the UE verifies authenticity of the TNGF. Specifically, because the UE has established a connection to the TNGF through the TNAP #1, the UE stores a root key corresponding to the TNGF (which may also be referred to as a root key between the UE and the TNGF), and the root key corresponding to the TNGF is the same as the foregoing root key corresponding to the UE. The UE may determine, based on the received TNGF information, or the identifier of the TNGF, or a message source (for example, the UE is connected to only one TNGF at a same moment, and therefore, a message received by the UE is from the TNAP #2), the root key corresponding to the TNGF. Then, the fourth verification parameter is generated based on the root key corresponding to the TNGF. A principle of generating the fourth verification parameter is similar to a principle of generating the first verification parameter, and details are not described herein again. Then, the UE compares the first verification parameter with the fourth verification parameter. If the first verification parameter is the same as the fourth verification parameter, it indicates that the first verification parameter matches the fourth verification parameter, that is, it indicates that the authentication on the TNGF succeeds. When the first verification parameter matches the fourth verification parameter, the UE generates a second verification parameter by using a second freshness parameter. For a principle of generating the second verification parameter by using the second freshness parameter, refer to the principle of generating the first verification parameter in S305. Details are not described herein again.

For example, the UE obtains the fourth verification parameter through calculation based on the root key corresponding to the TNGF, the IP address of the TNGF, and the first freshness parameter, and compares the fourth verification parameter with the first verification parameter. Alternatively, the UE obtains the fourth verification parameter through calculation based on the root key corresponding to the TNGF and the identity of the TNGF, and compares the fourth verification parameter with the first verification parameter. Alternatively, the TNGF obtains the fourth verification parameter through calculation based on the root key corresponding to the TNGF and the random number generated by the TNGF, and compares the fourth verification parameter with the first verification parameter. Alternatively, the TNGF generates an intermediate key based on the root key corresponding to the TNGF, obtains the fourth verification parameter through calculation by using K_{TNGF}', the IP address of the TNGF, and the first freshness parameter, and compares the fourth verification parameter with the first verification parameter. Alternatively, the TNGF generates an intermediate key based on the root key corresponding to the TNGF, obtains the fourth verification parameter through calculation by using the intermediate key and the identity of the TNGF, and compares the fourth verification parameter with the first verification parameter. Alternatively, the TNGF generates an intermediate key based on the root key corresponding to the TNGF, obtains the fourth verification parameter through calculation by using the intermediate key and the random number generated by the TNGF, and compares the fourth verification parameter with the first verification parameter.

S308: The UE sends an authentication response message to the TNAP #2. Correspondingly, the TNAP #2 receives the authentication response message from the UE.

The authentication response message includes the second verification parameter and the second freshness parameter. Optionally, the authentication response message may further include the identifier of the UE.

S308 may occur before S305 and S306, or may occur after S305 and S306. The following provides descriptions with reference to case 3.1 and case 3.2.

Case 3.1: If step 5a is performed before S308, S308 occurs after S305 and S306.

In this case, S308 may include: After the authentication method provided in this embodiment of this application includes step 1a, and it is verified that the first verification parameter is correct, performing S308.

In this case, the authentication response message is an EAP-RES/Restart message, an EAP-RES/SG-Restart message, an EAP-RES/SG-NAS message, an EAP-RES/SG/Notification message, an EAP-RESXU/5G-AN message, an EAP-REQ/SG-ReAUTH message, or an EAP-REQ/ReAUTH message. A message name is not specifically limited in this embodiment.

Case 3.2: S308 occurs before S305 and S306. The authentication response message may be an EAP-RES/Restart message, an EAP-RES/SG-Restart message, an EAP-RES/SG-NAS message, an EAP-RES/SG-Notification message (EAP-5G notification request message), an EAP-RES/5G-AN message, an EAP-REQ/SG-ReAUTH message, an EAP-REQ/ReAUTH message, an EAP-5G message that carries only an access network parameter, or the like. A message name is not specifically limited in this embodiment.

It may be understood that before S308, the method provided in this embodiment of this application may further include step 2a.

Step 2a: The UE generates the second freshness parameter and the second verification parameter. For example, the UE may generate the second freshness parameter, and generate the second verification parameter based on the second freshness parameter and the root key corresponding to the TNGF, or generate the second verification parameter based on the second freshness parameter. The second freshness parameter is a random number generated by the TNGF or a counter value. This is not specifically limited in this embodiment.

S309: The TNAP #2 sends the authentication response message to the TNGF. Correspondingly, the TNGF receives the authentication response message from the TNAP #2.

The TNAP #2 may transparently transmit the authentication response message. A manner in which the TNAP #2 sends the authentication response message is not limited herein.

S310: The TNGF verifies authenticity of the UE.

For example, S310 may include: The TNGF generates a third verification parameter by using the second freshness parameter. For a principle of generating the third verification parameter, refer to related descriptions of generating the first verification parameter in S305. The TNGF compares the third verification parameter with the second verification parameter, and if the third verification parameter is the same as the second verification parameter, it indicates that the third verification parameter matches the second verification parameter, that is, it indicates that the authentication on the UE succeeds.

It should be noted that in this embodiment of this application, there are a plurality of different possible execution sequences of S304 to S310, and an execution sequence of the steps may be corresponding to a specific case.

In a possible implementation, S304 to S310 may be sequentially performed.

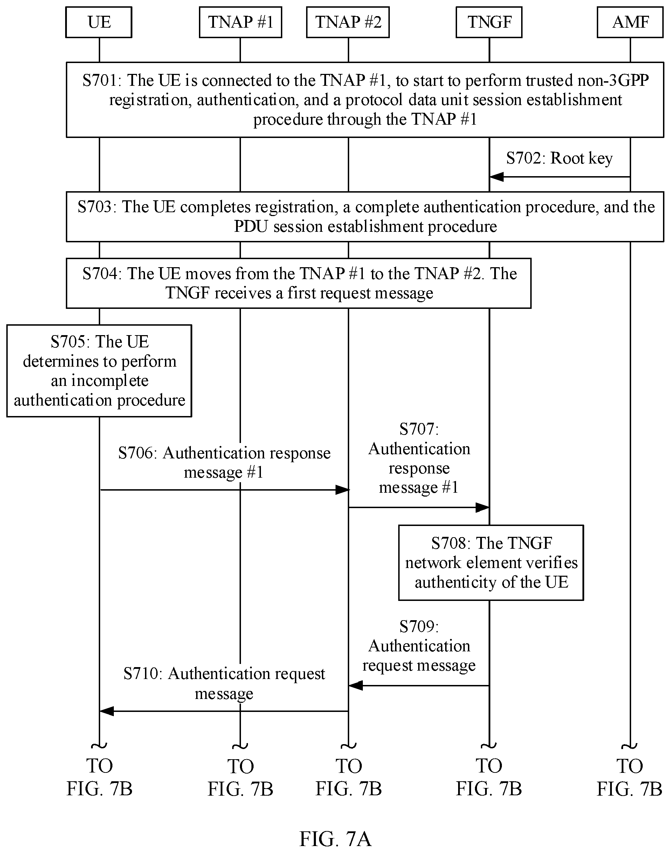

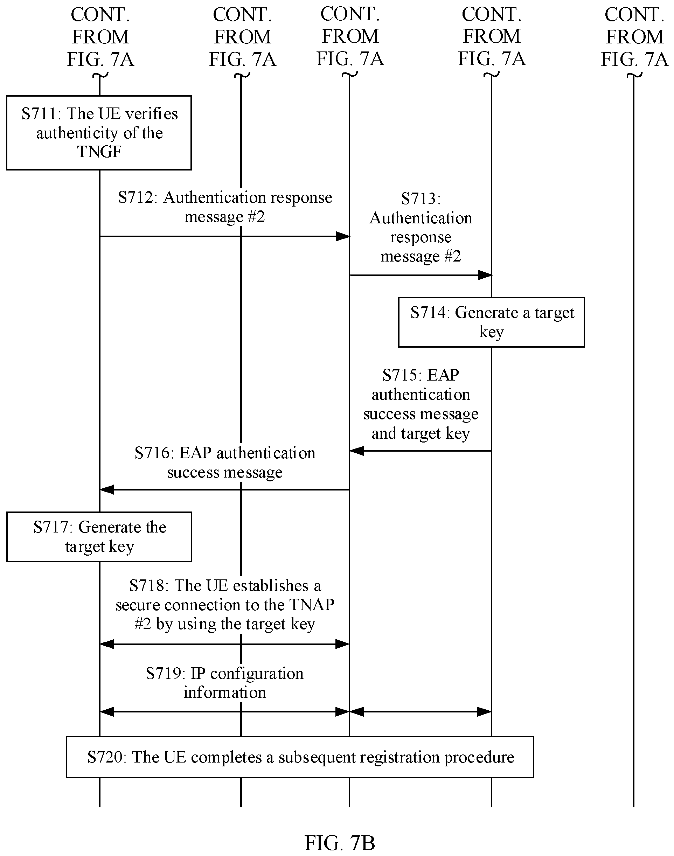

In another possible implementation, an execution sequence is S304, S307, S308, S309, S305 and S306, and finally S310. It should be noted that, in this case, steps in different cases in S308 may be inserted in different locations for execution. In this case, before S308, the TNGF may further send, to the UE, information that is of a same type as the authentication request message, for example, an authentication request message #1 shown in FIG. 7A and FIG. 7B. After S306, the UE may further send, to the TNGF through the TNAP, information that is of a same type as the authentication response message.

In another possible implementation, an execution sequence is S307, S304, S308, S309, S305 and S306, and finally S310.

It may be understood that, when the authentication on the TNGF succeeds, S311 may continue to be performed.

S311: The TNGF generates a target key.

The target key is used to protect communication security between the UE and the TNAP #2, or is used to establish a secure connection between the UE and the TNAP #2, that is, the target key.

In a possible design solution, S311 may include: The TNGF may directly generate the target key based on the root key corresponding to the UE. In this case, the TNGF may generate the target key in the following manner 1 or manner 2.

Manner 1: The TNGF generates an intermediate key based on the root key corresponding to the UE, and then generates the target key based on the intermediate key. The following step 6a and step 7a are performed.

Step 6a: The TNGF generates the intermediate key based on the root key corresponding to the UE and a first usage type distinguisher (usage type distinguisher).

Step 7a: The TNGF generates the target key based on the intermediate key and a second usage type distinguisher.

The second usage type distinguisher is different from the first usage type distinguisher.

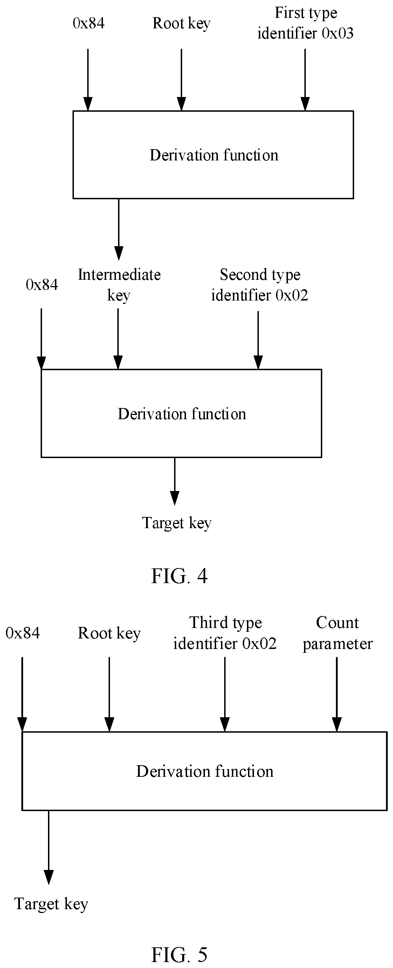

For example, as shown in FIG. 4, the TNGF may input the root key corresponding to the UE and the first usage type distinguisher into a key derivation function (key derivation function, KDF), so that the intermediate key can be obtained. The target key can be obtained by inputting the intermediate key and the second usage type distinguisher into the key derivation function. The first usage type distinguisher is used to identify a type of a generated key, for example, the intermediate key. For example, the first usage type distinguisher may be 0x03. The second usage type distinguisher is used to identify a type of a generated key, for example, the target key. The second usage type distinguisher may be 0x02.

It may be understood that an input parameter of the key derivation function may further include a fixed code, for example, 0x84.

It may be understood that, when S311 includes step 6a and step 7a, an execution sequence of one or more steps in step S304 to step S309 may further be between step 6a and step 7a. A sequence of S304 to S310, S311, and step 6a and step 7a is not limited. In a possible design solution, step 7a may be performed after the TNGF determines the root key corresponding to the UE.

Manner 2: Generate the target key with reference to the root key corresponding to the UE and a count parameter.

The TNGF determines the target key based on the root key corresponding to the UE, a third usage type distinguisher, and the count parameter. The count parameter may be a count value of a counter, and the count value may be determined based on a quantity of times of TNAP handover of the UE. For example, the count value is the quantity of times of TNAP handover of the UE.

For example, as shown in FIG. 5, the TNGF may input the intermediate key, the third usage type distinguisher, and the count parameter into a key derivation function, so that the target key can be obtained.

It may be understood that an input parameter of the key derivation function may further include a fixed code, for example, 0x84.

For example, the second usage type distinguisher is 0x02.

It may be understood that the key derivation function in S311 follows a key derivation function defined in TS 33.501 A22, and details are not described herein again.

In another possible design solution, that the TNGF generates the target key based on the root key corresponding to the UE may include: The TNGF generates an intermediate key based on the root key corresponding to the UE, the first freshness parameter, and the second freshness parameter; and the TNGF generates the target key based on the intermediate key and the second usage type distinguisher, where the second usage type distinguisher is different from the first usage type distinguisher. For example, a value of the second usage type distinguisher is 0x02.

In another possible design solution, that the TNGF generates the target key based on the root key corresponding to the UE in S311 may include: The TNGF generates the target key based on the root key such as K_{TNGF} corresponding to the UE, the first freshness parameter, and the second freshness parameter.

It may be understood that, in some possible embodiments, S311 may be performed after S301 to S304 and before S305.

S312: The TNGF sends an EAP authentication success message (EAP-Success message) and the target key to the TNAP #2.

For an implementation principle of the authentication success message, refer to related descriptions in section 7.2A.1 in version 17.7.0 of TS 33.501. For an implementation principle of S312, refer to related descriptions in section 7.2A.1 in version 17.7.0 of TS 33.501. Details are not described herein again.

S313: The TNAP #2 sends the EAP authentication success message to the UE. Correspondingly, the UE receives the authentication success message from the TNAP #2.

In a possible design solution, before S313, the method further includes: After receiving the EAP authentication success message and the target key, the TNAP #2 may store the target key, and then send the EAP authentication success message to the UE.

For an implementation principle of S314, refer to related descriptions in section 7.2A.1 in version 17.7.0 of TS 33.501.

S314: The UE generates the target key.

For a method of generating the target key by the UE, refer to related descriptions in S311. Details are not described herein again.

S315: The UE establishes a secure connection to the TNAP #2 by using the target key.

For an implementation principle of S315, refer to related descriptions of step 12 in section 7.2A.1 in version 17.7.0 of TS 33.501.

S316: The UE receives IP configuration information from the TNGF. Correspondingly, the UE receives the IP configuration information from the TNGF.

The IP configuration information indicates an IP address for communication between the TNGF and the UE.

For an implementation principle of S316, refer to step 12 in section 7.2A.1 in version 17.7.0 of TS 33.501.

S317: The UE completes a subsequent registration procedure.

For an implementation principle of S317, refer to steps 13 to 19 in section 7.2A.1 in version 17.7.0 of TS 33.501.

For ease of understanding, the following describes a procedure of the authentication method in embodiments of this application with reference to specific scenarios.

It may be understood that in embodiments of this application, in different scenarios, there may be another execution sequence for steps between S304 and S315 in FIG. 3A and FIG. 3B. Details are not described herein.

### Scenario 1:

FIG. 6A and FIG. 6B are a schematic flowchart 2 of an authentication method according to an embodiment of this application. The authentication method is mainly applicable to a case in which UE is handed over between TNAPs in a same TNGF, both the UE and a TNGF side perform an authentication procedure, and a target key is generated when verification succeeds. The following describes a communication procedure of the authentication method shown in FIG. 6A and FIG. 6B based on a TNAP #1 and a TNAP #2 with reference to the UE.

S601: The UE is connected to the TNAP #1, to start to perform trusted non-3GPP registration, authentication, and a PDU session establishment procedure through the TNAP #1.

Information exchanged in S301 may include an identifier of the UE. For an implementation principle of the identifier of the UE, refer to related descriptions in S301. Details are not described herein again.

For a specific implementation of S601, refer to S301. Details are not described herein again.

It should be noted that step S601 is divided into a plurality of substeps, and different UE identifiers are carried in different substeps. For example, in a step, the UE sends an EAP-REQ/Identity message to the TNGF through the TNAP #1, where the message carries an identifier of the UE in an NAI format. In another step, the UE sends an EAP-SG/NAS message through the TNAP #1, where the message carries an AN parameter, and an identifier of the UE carried in the AN parameter is a 5G-GUTI or an SUCI.

S602: An AMF sends a root key to the TNGF. Correspondingly, the TNGF receives the root key from the AMF.

For a specific implementation principle of S602, refer to related descriptions in S302. Details are not described herein again.

S603: The UE completes registration, a complete authentication procedure, and the PDU session establishment procedure.

For a specific implementation principle, refer to related descriptions in S303. Details are not described herein again.

S604: The UE is connected to the TNAP #2.

For a specific implementation principle of S604, refer to a procedure defined in 7A.2.1 in version 17.7.0 of protocol version TS 33.501. Details are not described herein again.

S605: The TNAP #2 sends an EAP response message to the UE. Correspondingly, the UE receives the EAP response message from the TNAP #2.

The EAP response message is generated by the TNAP #2, for example, an EAP-RES/Identity message. The EAP response message is used to request the identifier of the UE from the UE.

S606: The UE determines to perform an incomplete authentication procedure.

For an implementation principle of S606, refer to related descriptions of case 2.2 or case 2.3 in S307. Details are not described herein again.

S607: The UE sends a first request message to the TNAP #2. Correspondingly, the TNAP #2 receives the first request message from the UE.

The first request message may include the identifier of the UE.

The first request message may be an EAP-REQ/Identity message. The message may include at least one identifier of the UE sent by the UE in step S601.

For an implementation principle of S607, refer to related descriptions of case 1.2 in S304. Details are not described herein again.

S608: The TNAP #2 sends the first request message to the TNGF. Correspondingly, the TNGF receives the first request message from the TNAP #2.

After the TNGF receives the first request message, the TNGF determines, based on the first request message, to trigger an incomplete authentication procedure.

For an implementation principle of determining, by the TNGF based on the first request message, to trigger the incomplete authentication procedure, refer to related descriptions in S305. Details are not described herein again.

S609: The TNGF determines, based on the identifier of the UE in the first request message, a root key corresponding to the UE.

For an implementation principle of S609, refer to related descriptions of determining, by the TNGF based on the identifier of the UE in the first request message, the root key corresponding to the UE in S305. Details are not described herein again.

S610: The TNGF generates a first freshness parameter and a first verification parameter based on the root key corresponding to the UE.

For an implementation principle of S610, refer to related descriptions of manner 1 and manner 2 in S305. Details are not described herein again.

S611: The TNGF sends an authentication request message to the TNAP #2 in response to the first request message. Correspondingly, the TNAP #2 receives the authentication request message from the TNGF.

For an implementation principle of S611, refer to related descriptions in S305. Details are not described herein again. Optionally, the message carries an identifier of the TNGF. Specifically, if the identifier of the TNGF is not carried in step S604, in a case, the authentication request message carries the identifier of the TNGF, to ensure that the UE can find the root key corresponding to the TNGF; or in another case, if the UE is connected to only one TNGF at a moment, an identifier of the TNGF may not be carried. In this case, the UE may determine, based on a source of an authentication response message, whether to perform non-3GPP access. If the authentication response message is from the TNAP #2, the UE may determine to perform non-3GPP access. Therefore, all security contexts of non-3GPP access can be found, that is, the root key corresponding to the TNGF can be determined.

S612: The TNAP #2 sends the authentication request message to the UE. Correspondingly, the UE receives the authentication request message from the TNAP #2.

For an implementation principle of S612, refer to related descriptions in S306. Details are not described herein again.

S613: The UE generates a target key.

For an implementation principle of S613, refer to related descriptions in S314. Details are not described herein again.

S614: The UE sends an authentication response message to the TNAP #2. Correspondingly, the TNAP #2 receives the authentication response message from the UE.

For an implementation principle of S614, refer to related descriptions in S308. Details are not described herein again.

S615: The TNAP #2 sends the authentication response message to the TNGF. Correspondingly, the TNGF receives the authentication response message from the TNAP #2.

For an implementation principle of S615, refer to related descriptions in S309. Details are not described herein again.

S616: The TNGF generates the target key.

For an implementation principle of S616, refer to related descriptions in S311. Details are not described herein again.

S617: The TNGF sends an EAP authentication success message (EAP-Success message) and the target key to the TNAP #2.

For an implementation principle of S617, refer to related descriptions in S312. Details are not described herein again.

S618: The TNAP #2 sends the EAP authentication success message to the UE. Correspondingly, the UE receives the authentication success message from the TNAP #2.

For an implementation principle of S618, refer to related descriptions in S313. Details are not described herein again.

S619: The UE establishes a secure connection to the TNAP #2 by using the target key.

For an implementation principle of S619, refer to related descriptions in S315. Details are not described herein again.

S620: The UE receives IP configuration information from the TNGF. Correspondingly, the UE receives the IP configuration information from the TNGF.

The IP configuration information indicates an IP address for communication between the TNGF and the UE.

For an implementation principle of S620, refer to related descriptions in S316. Details are not described herein again.

S621: The UE completes a subsequent registration procedure.

For an implementation principle of S621, refer to related descriptions in S317. Details are not described herein again.

### Scenario 2:

FIG. 7A and FIG. 7B are a schematic flowchart 3 of an authentication method according to an embodiment of this application. The authentication method is mainly applicable to a case in which UE is handed over between TNAPs in a same TNGF, authentication is performed on both a TNGF side and a UE side, and after authentication procedures of the UE and the TNGF are completed, the UE and the TNGF generate a target key. The following describes a communication procedure of the authentication method shown in FIG. 7A and FIG. 7B based on a TNAP #1 and a TNAP #2 with reference to the UE.

S701: The UE is connected to the TNAP #1, to start to perform trusted non-3GPP registration, authentication, and a PDU session establishment procedure through the TNAP #1.

For an implementation principle of S701, refer to related descriptions in S301. Details are not described herein again.

S702: An AMF sends a root key to the TNGF. Correspondingly, the TNGF receives the root key from the AMF.

For an implementation principle of S702, refer to related descriptions in S302. Details are not described herein again.

S703: The UE completes registration, a complete authentication procedure, and the PDU session establishment procedure.

For an implementation principle of S703, refer to related descriptions in S303. Details are not described herein again.

S704: The TNGF receives a first request message through the TNAP #2.

For an implementation principle of S704, refer to related descriptions of case 1.2 in S304. Details are not described herein again.

S705: The UE determines to perform an incomplete authentication procedure.

For an implementation principle of S705, refer to related descriptions in S307. Details are not described herein again.

S706: The UE sends an authentication response message #1 to the TNAP #2. Correspondingly, the TNAP #2 receives the authentication response message #1 from the UE.

The authentication response message #1 includes a second verification parameter and a second freshness parameter.

Optionally, the authentication response message #1 may further include an identifier of the UE.

For an implementation principle of S706, refer to related descriptions of case 3.2 in S308. Details are not described herein again.

It may be understood that before an authentication request message #1 is sent, the UE may further send the authentication request message #1 to the TNGF through the TNAP #2. The authentication request message #1 is used to send the identifier of the UE to the TNGF. The authentication response message #1 may be an EAP-RES/SG-NAS message that includes only an AN parameter, or the authentication response message #1 may be an EAP-RES/Identity message.

S707: The TNAP #2 sends the authentication response message #1 to the TNGF. Correspondingly, the TNGF receives the authentication response message #1 from the TNAP #2.

For the authentication response message #1, refer to related descriptions of the authentication response message in FIG. 3A and FIG. 3B. For an implementation principle of S707, refer to related descriptions in S309. Details are not described herein again.

S708: The TNGF verifies authenticity of the UE.

For an implementation principle of S708, refer to related descriptions in S310. Details are not described herein again.

S709: The TNGF sends an authentication request message #2 to the TNAP #2. Correspondingly, the TNAP #2 receives the authentication request message #2 from the TNGF.

For an implementation principle of the authentication request message #2, refer to related descriptions of the authentication request message in S305. For an implementation principle of S708, refer to related descriptions in S305. Details are not described herein again.

S710: The TNAP #2 sends the authentication request message #2 to the UE. Correspondingly, the UE receives the authentication request message #2 from the TNAP #2.

For an implementation principle of S710, refer to related descriptions in S306. Details are not described herein again.

S711: The UE verifies authenticity of the TNGF.

For an implementation principle of S711, refer to related descriptions of case 3.1 in S308. Details are not described herein again.

S712: The UE sends an authentication response message #2 to the TNAP #2. Correspondingly, the TNAP #2 receives the authentication response message #2 from the UE.

The authentication response message #2 indicates the TNGF to send an authentication success message, for example, an EAP authentication response message. Optionally, the authentication response message carries indication information indicating that authentication performed by the UE on the TNGF succeeds. The authentication response message #2 may be an EAP-RES/ReAUTH message or an EAP-RES/SG-NAS/ReAUTH message. The authentication response message #2 corresponds to the authentication request message #2. The authentication response message #2 may be an EAP-RES/ReAUTH message or an EAP-RES/SG-NAS/ReAUTH message.

S713: The TNAP #2 sends the authentication response message #2 to the TNGF. Correspondingly, the TNGF receives the authentication response message #2 from the TNAP #2.

S714: The TNGF generates a target key.

For an implementation principle of S714, refer to related descriptions in S311. Details are not described herein again.

Optionally, if the TNGF determines, based on indication information carried in the messages in steps S712 and S713, that the authentication performed by the UE on the TNGF succeeds, the TNGF generates the target key.

S715: The TNGF sends an EAP authentication success message and the target key to the TNAP #2.

For an implementation principle of S715, refer to related descriptions in S312. Details are not described herein again.

S716: The TNAP #2 sends the EAP authentication success message to the UE. Correspondingly, the UE receives the authentication success message from the TNAP #2.

For an implementation principle of S716, refer to related descriptions in S313. Details are not described herein again.

S717: The UE generates the target key.

For an implementation principle of S717, refer to related descriptions in S314. Details are not described herein again.

S718: The UE establishes a secure connection to the TNAP #2 by using the target key.

For an implementation principle of S718, refer to related descriptions in S315. Details are not described herein again.

S719: The UE receives IP configuration information from the TNGF. Correspondingly, the UE receives the IP configuration information from the TNGF.

For an implementation principle of S719, refer to related descriptions in S316. Details are not described herein again.

S720: The UE completes a subsequent registration procedure.

For an implementation principle of S720, refer to related descriptions in S317. Details are not described herein again.

### Scenario 3:

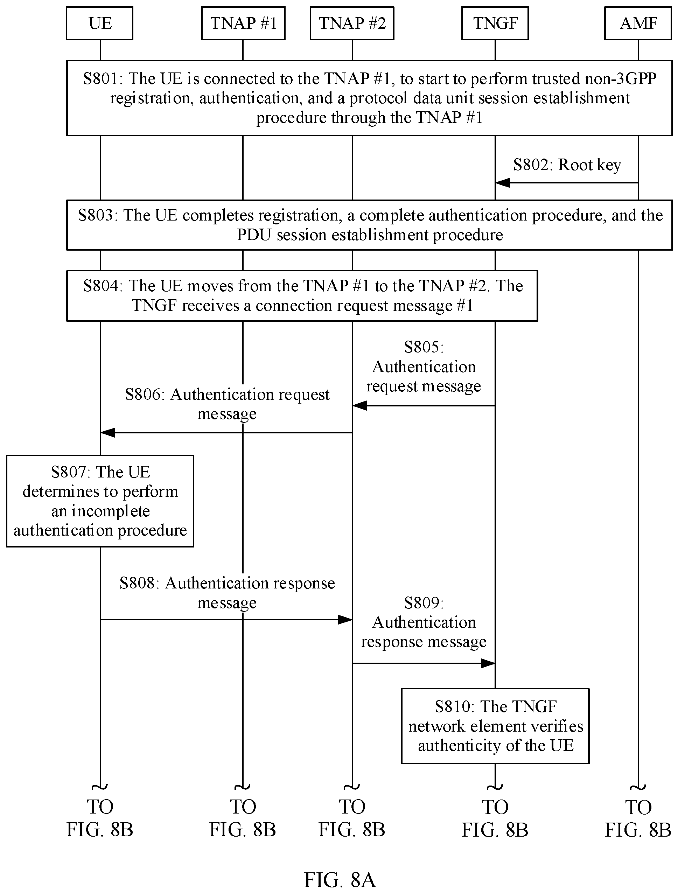

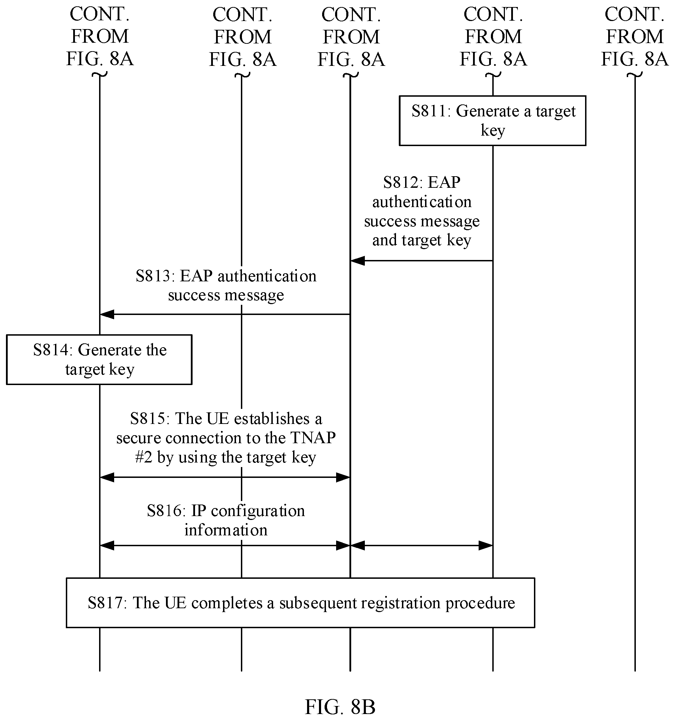

FIG. 8A and FIG. 8B are a schematic flowchart 4 of an authentication method according to an embodiment of this application. The authentication method is mainly applicable to a case in which UE is handed over between TNAPs in a same TNGF, authentication is performed on the UE on a TNGF side, and after the TNGF performs authentication on the UE and exchanges information with the UE, the UE generates a key. The following describes a communication procedure of the authentication method shown in FIG. 8A and FIG. 8B based on a TNAP #1 and a TNAP #2 with reference to the UE.

S801: The UE is connected to the TNAP #1, to start to perform trusted non-3GPP registration, authentication, and a PDU session establishment procedure through the TNAP #1.

For an implementation principle of S801, refer to related descriptions in S301. Details are not described herein again.

S802: An AMF sends a root key to the TNGF. Correspondingly, the TNGF receives the root key from the AMF.

For an implementation principle of S802, refer to related descriptions in S302. Details are not described herein again.

S803: The UE completes registration, a complete authentication procedure, and the PDU session establishment procedure.

For an implementation principle of S803, refer to related descriptions in S303. Details are not described herein again.

S804: The TNGF receives a first request message through the TNAP #2.

For an implementation principle of S804, refer to related descriptions in S304. Details are not described herein again.

S805: The TNGF sends an authentication request message to the TNAP #2 in response to the first request message. Correspondingly, the TNAP #2 receives the authentication request message from the TNGF.

For an implementation principle of S805, refer to related descriptions in S305. Details are not described herein again.

S806: The TNAP #2 sends the authentication request message to the UE. Correspondingly, the UE receives the authentication request message from the TNAP #2.

For an implementation principle of S806, refer to related descriptions in S306. Details are not described herein again.

S807: The UE determines to perform an incomplete authentication procedure.

For an implementation principle of S807, refer to related descriptions in S307. Details are not described herein again.

S808: The UE sends an authentication response message to the TNAP #2. Correspondingly, the TNAP #2 receives the authentication response message from the UE.

For an implementation principle of S808, refer to related descriptions in S308. Details are not described herein again.

S809: The TNAP #2 sends the authentication response message to the TNGF. Correspondingly, the TNGF receives the authentication response message from the TNAP #2.

For an implementation principle of S809, refer to related descriptions in S309. Details are not described herein again.

S810: The TNGF verifies authenticity of the UE.

For an implementation principle of S810, refer to related descriptions in S310. Details are not described herein again.

S811: The TNGF generates a target key.

For an implementation principle of S811, refer to related descriptions in S311. Details are not described herein again. It may be understood that, when S311 includes step 8a and step 7a, step 6a and step 7a are sequentially performed, step 6a may be performed after S810, and step 7a may be performed before S812.

S812: The TNGF sends an EAP authentication success message and the target key to the TNAP #2.

For an implementation principle of S812, refer to related descriptions in S312. Details are not described herein again.

S813: The TNAP #2 sends the EAP authentication success message to the UE. Correspondingly, the UE receives the authentication success message from the TNAP #2.

For an implementation principle of S813, refer to related descriptions in S313. Details are not described herein again.

S814: The UE generates the target key.

For an implementation principle of S814, refer to related descriptions in S314. Details are not described herein again.

S815: The UE establishes a secure connection to the TNAP #2 by using the target key.

For an implementation principle of S815, refer to related descriptions in S315. Details are not described herein again.

S816: The UE receives IP configuration information from the TNGF. Correspondingly, the UE receives the IP configuration information from the TNGF.

For an implementation principle of S816, refer to related descriptions in S316. Details are not described herein again.

S817: The UE completes a subsequent registration procedure.

For an implementation principle of S817, refer to related descriptions in S317. Details are not described herein again.

Based on the authentication method provided in any one of FIG. 3A and FIG. 3B, FIG. 6A and FIG. 6B, FIG. 7A and FIG. 7B, or FIG. 8A and FIG. 8B, when the UE is handed over from the source TNAP to the target TNAP, the TNGF may generate the intermediate key based on the stored root key, generate the target key for the target TNAP, and send the target key to the target TNAP, to perform secure communication between the UE and the TNAP. In this way, in a case of TNAP handover, the target key is generated based on the root key stored in the TNGF, so that execution of a complete authentication procedure can be avoided, that is, an interaction procedure can be simplified, thereby improving communication efficiency and reliability.

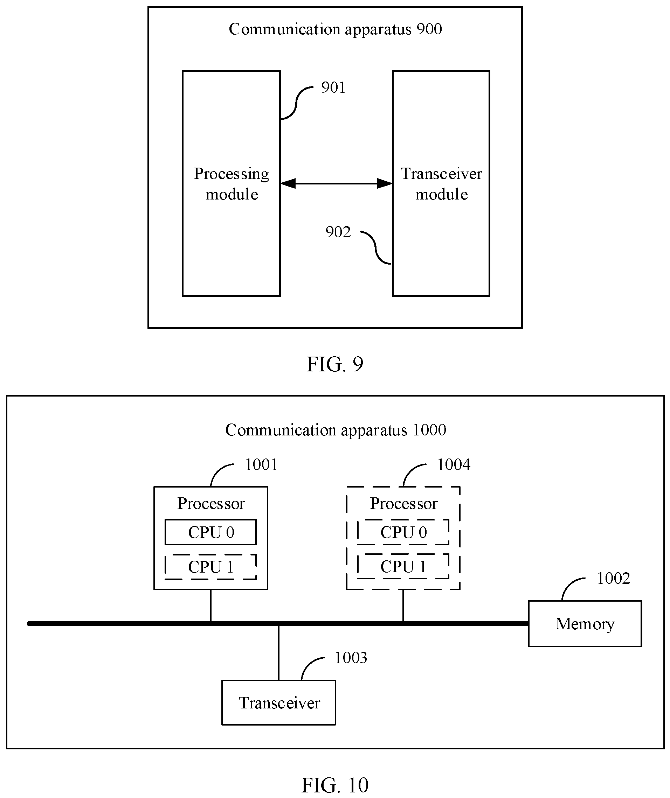

The authentication method provided in embodiments of this application is described in detail above with reference to FIG. 3A and FIG. 3B to FIG. 8A and FIG. 8B. A communication apparatus configured to perform the authentication method provided in embodiments of this application is described in detail below with reference to FIG. 9 and FIG. 10.

For example, FIG. 9 is a diagram 1 of a structure of a communication apparatus 900 according to an embodiment of this application. As shown in FIG. 9, the communication apparatus 900 includes a processing module 901 and a transceiver module 902. For ease of description, FIG. 9 shows only main components of the communication apparatus 900.

In some embodiments, the communication apparatus 900 is applicable to the communication system shown in FIG. 2, and performs a function of the TNGF in the authentication method shown in any one of FIG. 3A and FIG. 3B, FIG. 6A and FIG. 6B, FIG. 7A and FIG. 7B, or FIG. 8A and FIG. 8B.

The processing module 901 is configured to: when user equipment UE moves from a source trusted non-3rd generation partnership project 3GPP access point TNAP to a target TNAP, generate an intermediate key based on a stored root key corresponding to the UE, and generate a target key for the target TNAP by using the intermediate key.

The transceiver module 902 is configured to send the target key to the target TNAP.

The target key is used to protect communication security between the UE and the target TNAP.

In a possible design solution, the processing module 901 is specifically configured to generate the intermediate key based on a first usage type distinguisher and the root key. The first usage type distinguisher is used to identify the generated intermediate key.

In a possible design solution, the transceiver module 902 is further configured to send an authentication request message to the UE through the target TNAP. The authentication request message may include a first verification parameter and a first freshness parameter. The first verification parameter is generated by the communication apparatus 900 based on the intermediate key and the first freshness parameter. The transceiver module 902 is further configured to receive an authentication response message from the UE. The authentication response message includes a second verification parameter and a second freshness parameter. The processing module 901 is further configured to obtain a third verification parameter based on the intermediate key and the second freshness parameter. The processing module 901 is specifically configured to: when the third verification parameter matches the second verification parameter, generate, by the communication apparatus 900, the target key for the target TNAP by using the intermediate key.

In a possible design solution, the transceiver module 902 is further configured to send an authentication request message to the UE through the target TNAP. The authentication request message may include a first verification parameter and a first freshness parameter. The first verification parameter is generated by the communication apparatus 900 based on the root key and the first freshness parameter. The transceiver module 902 is further configured to receive an authentication response message from the UE. The authentication response message may include a second verification parameter and a second freshness parameter. The processing module 901 is further configured to obtain a third verification parameter based on the root key and the second freshness parameter. The processing module 901 is specifically configured to: when the third verification parameter matches the second verification parameter, generate the target key for the target TNAP by using the intermediate key.

In a possible design solution, the transceiver module 902 is further configured to send an authentication request message to the UE through the target TNAP. The authentication request message may include a first verification parameter and a first freshness parameter. The first verification parameter is generated by the communication apparatus 900 based on the intermediate key and the first freshness parameter. The transceiver module 902 is further configured to receive an authentication response message from the UE, where the authentication response message includes a second verification parameter and a second freshness parameter. The communication apparatus 900 obtains a third verification parameter based on the intermediate key and the second freshness parameter. That the communication apparatus 900 sends the target key to the target TNAP may include: When the third verification parameter matches the second verification parameter, the communication apparatus 900 sends the target key to the target TNAP.

In a possible design solution, the transceiver module 902 is further configured to send an authentication request message to the UE through the target TNAP, where the authentication request message may include a first verification parameter and a first freshness parameter. The first verification parameter is generated by the communication apparatus 900 based on the root key and the first freshness parameter. The transceiver module 902 is further configured to receive an authentication response message from the UE. The authentication response message may include a second verification parameter and a second freshness parameter. The processing module 901 is further configured to obtain a third verification parameter based on the root key and the second freshness parameter. The transceiver module 902 is specifically configured to: when the third verification parameter matches the second verification parameter, send the target key to the target TNAP.

In a possible design solution, the transceiver module 902 is further configured to: send an authentication request message #1 to the UE through the target TNAP, where the authentication request message #1 includes an identifier of the UE; and receive an authentication response message #1 from the UE. The authentication response message #1 may include a second verification parameter and a second freshness parameter. The processing module 901 is further configured to obtain a third verification parameter based on the intermediate key and the second freshness parameter. The processing module 901 is specifically configured to: when the third verification parameter matches the second verification parameter, generate the target key for the target TNAP by using the intermediate key. The transceiver module 902 is further configured to send an authentication request message #2 to the UE through the target TNAP, where the authentication request message #2 includes a first verification parameter and a first freshness parameter. The first verification parameter is generated by the communication apparatus 900 based on the intermediate key and the first freshness parameter. The transceiver module 902 is further configured to receive an authentication response message #2 from the UE through the target TNAP, where the authentication response message #2 indicates the TNGF to send an authentication success message.

In a possible design solution, the transceiver module 902 is further configured to: send an authentication request message #1 to the UE through the target TNAP, where the authentication request message #1 includes an identifier of the UE; and receive an authentication response message #1 from the UE. The authentication response message #1 includes a second verification parameter and a second freshness parameter. The processing module 901 is further configured to obtain a third verification parameter based on the root key and the second freshness parameter. The processing module 901 is specifically configured to: when the third verification parameter matches the second verification parameter, generate the target key for the target TNAP by using the intermediate key. The transceiver module is further configured to send an authentication request message #2 to the UE through the target TNAP. The authentication request message #2 may include a first verification parameter and a first freshness parameter. The first verification parameter is generated by the communication apparatus 900 based on the root key and the first freshness parameter. The transceiver module 902 is further configured to receive an authentication response message #2 from the UE through the target TNAP, where the authentication response message #2 indicates the TNGF to send an authentication success message.

In a possible design solution, the processing module 901 is specifically configured to generate the target key based on a second usage type distinguisher and the intermediate key. The second usage type distinguisher is used to identify the generated intermediate key.

In a possible design solution, the transceiver module 902 is further configured to receive a first request message from the target TNAP. The processing module 901 is further configured to determine, in response to the first request message, that an authentication procedure between the communication apparatus 900 and the UE needs to be performed.

Optionally, the first request message may include the identifier of the UE. The processing module 901 is specifically configured to determine that the identifier of the UE in the first request message is the same as an identifier of UE that has been connected to the source TNAP.

In a possible design solution, the processing module 901 is further configured to determine the root key based on the identifier of the UE.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform a function of the TNGF in the authentication method shown in any one of FIG. 3A and FIG. 3B, FIG. 6A and FIG. 6B, FIG. 7A and FIG. 7B, or FIG. 8A and FIG. 8B.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a network device such as a TNGF, may be a chip (system) or another part or component that can be disposed in the network device, or may be an apparatus that includes the network device. This is not limited in this application.

In addition, for technical effects of the communication apparatus 900, refer to technical effects of the authentication method shown in any one of FIG. 3A and FIG. 3B, FIG. 6A and FIG. 6B, FIG. 7A and FIG. 7B, or FIG. 8A and FIG. 8B. Details are not described herein again.

In some other embodiments, the communication apparatus 900 is applicable to the communication system shown in FIG. 2, and performs a function of the communication apparatus 900 in the authentication method shown in any one of FIG. 3A and FIG. 3B, FIG. 6A and FIG. 6B, FIG. 7A and FIG. 7B, or FIG. 8A and FIG. 8B. The communication apparatus 900 may be used in a scenario in which the communication apparatus 900 moves from a source trusted non-3rd generation partnership project 3GPP access point TNAP to a target TNAP.

The processing module 901 is configured to generate an intermediate key based on a root key between the communication apparatus and a trusted non-3GPP gateway function TNGF. The TNGF is a management network element of the source TNAP and the target TNAP, and the processing module 901 is configured to generate a target key for the target TNAP by using the intermediate key. The target key is used to protect communication security between the communication apparatus 900 and the target TNAP.

In a possible design solution, the processing module 901 is specifically configured to generate the intermediate key based on a first usage type distinguisher and the root key. The first usage type distinguisher is used to identify the generated intermediate key.

In a possible design solution, the transceiver module 902 is configured to receive an authentication request message from the TNGF through the target TNAP. The authentication request message may include a first verification parameter and a first freshness parameter. The first verification parameter is generated by the TNGF based on the intermediate key and the first freshness parameter. The processing module 901 is further configured to obtain a fourth verification parameter by using the intermediate key and the first freshness parameter. The transceiver module 902 is further configured to: when the fourth verification parameter matches the first verification parameter, send an authentication response message to the TNGF. The authentication response message may include a second verification parameter and a second freshness parameter.

In a possible design solution, the transceiver module 902 is further configured to receive an authentication request message from the TNGF through the target TNAP. The authentication request message may include a first verification parameter and a first freshness parameter. The first verification parameter is generated by the TNGF based on the root key and the first freshness parameter. The processing module 901 is further configured to obtain a fourth verification parameter by using the root key and the first freshness parameter. The transceiver module 902 is further configured to: when the fourth verification parameter matches the first verification parameter, send an authentication response message to the TNGF. The authentication response message may include a second verification parameter and a second freshness parameter.

In a possible design solution, the transceiver module 902 is further configured to receive an authentication request message from the TNGF through the target TNAP. The authentication request message may include a first verification parameter and a first freshness parameter. The first verification parameter is generated by the TNGF based on the root key and the first freshness parameter. The processing module 901 is further configured to obtain a fourth verification parameter by using the intermediate key and the first freshness parameter. The processing module 901 is specifically configured to: when the fourth verification parameter matches the first verification parameter, generate the intermediate key based on the root key between the communication apparatus 900 and the TNGF. The transceiver module 902 may be further configured to send an authentication response message to the TNGF. The authentication response message may include an identifier of the communication apparatus 900, a second verification parameter, and a second freshness parameter.

In a possible design solution, the transceiver module 902 is further configured to receive an authentication request message from the TNGF through the target TNAP. The authentication request message may include a first verification parameter and a first freshness parameter. The first verification parameter is generated by the TNGF based on the root key and the first freshness parameter. The processing module 901 is configured to obtain a fourth verification parameter by using the root key and the first freshness parameter. The processing module 901 is specifically configured to: when the fourth verification parameter matches the first verification parameter, generate the intermediate key based on the root key between the communication apparatus and the TNGF. The transceiver module 902 is further configured to send an authentication response message to the TNGF. The authentication response message may include an identifier of the communication apparatus 900, a second verification parameter, and a second freshness parameter.

In a possible design solution, the processing module 901 is specifically configured to generate the target key based on a second usage type distinguisher and the intermediate key. The second usage type distinguisher is used to identify the generated intermediate key.

Optionally, the transceiver module 902 is further configured to send a first request message to the target TNAP. Further, the first request message may include the identifier of the communication apparatus 900.

In a possible design solution, the processing module 901 is further configured to determine the root key based on an identifier of the TNGF.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform a function of the TNGF in the authentication method shown in any one of FIG. 3A and FIG. 3B, FIG. 6A and FIG. 6B, FIG. 7A and FIG. 7B, or FIG. 8A and FIG. 8B.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a terminal device, may be a chip (system) or another part or component that can be disposed in the terminal device, or may be an apparatus that includes the terminal device. This is not limited in this application.

In addition, for technical effects of the communication apparatus 900, refer to technical effects of the authentication method shown in any one of FIG. 3A and FIG. 3B, FIG. 6A and FIG. 6B, FIG. 7A and FIG. 7B, or FIG. 8A and FIG. 8B. Details are not described herein again.

For example, FIG. 10 is a diagram 2 of a structure of a communication apparatus according to an embodiment of this application. The communication apparatus may be a terminal device or a network device, or may be a chip (system) or another part or component that can be disposed in the terminal device or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected to the memory 1002 and the transceiver 1003 through a communication bus.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing unit, CPU), or may be an application-specific integrated circuit (application-specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1001 may run or execute a software program stored in the memory 1002 and invoke data stored in the memory 1002, to perform various functions of the communication apparatus 1000.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU) or a multi-core processor (multi-CPU). The processor herein may be one or more devices, circuits, and/or processing cores configured to process data (for example, computer program instructions).

The memory 1002 is configured to store a software program for performing the solutions of this application, and the processor 1001 controls execution of the software program. For a specific implementation, refer to the foregoing method embodiments. Details are not described herein again.

Optionally, the memory 1002 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 1002 may be integrated with the processor 1001, or may exist independently and is coupled to the processor 1001 by using an interface circuit (not shown in FIG. 10) of the communication apparatus 1000. This is not specifically limited in this embodiment of this application.

The transceiver 1003 is configured to communicate with another communication apparatus. For example, the communication apparatus 1000 is a terminal device, and the transceiver 1003 may be configured to communicate with a network device or another terminal device. For another example, the communication apparatus 1000 is a network device, and the transceiver 1003 may be configured to communicate with a terminal device or another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 by using an interface circuit (not shown in FIG. 10) of the communication apparatus 1000. This is not specifically limited in this embodiment of this application.

It should be noted that the structure of the communication apparatus 1000 shown in FIG. 10 does not constitute a limitation on the communication apparatus. An actual communication apparatus may include more or fewer components than those shown in the figure, or combine some components, or have different component arrangements.

In addition, for technical effects of the communication apparatus 1000, refer to the technical effects of the authentication method in the foregoing method embodiments. Details are not described herein again.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
when user equipment UE moves from a source trusted non-3rd generation partnership project 3GPP access point TNAP to a target TNAP, generating, by a trusted non-3GPP gateway function TNGF, an intermediate key based on a stored root key corresponding to the UE;
generating, by the TNGF, a target key for the target TNAP by using the intermediate key; and
sending, by the TNGF, the target key to the target TNAP, wherein the target key is used to protect communication security between the UE and the target TNAP.

2. The method according to claim 1, wherein generating, by the TNGF, the intermediate key based on the stored root key corresponding to the UE comprises:
generating, by the TNGF, the intermediate key based on a first usage type distinguisher and the root key, wherein the first usage type distinguisher is used to identify the generated intermediate key.

3. The method according to claim 1 or 2, wherein before generating, by the TNGF, the target key for the target TNAP by using the intermediate key, the method comprises:
sending, by the TNGF, an authentication request message to the UE through the target TNAP, wherein the authentication request message comprises a first verification parameter and a first freshness parameter, and the first verification parameter is generated by the TNGF based on the intermediate key and the first freshness parameter;
receiving, by the TNGF, an authentication response message from the UE, wherein the authentication response message comprises a second verification parameter and a second freshness parameter; and
obtaining, by the TNGF, a third verification parameter based on the intermediate key and the second freshness parameter; and
generating, by the TNGF, the target key for the target TNAP by using the intermediate key comprises:
when the third verification parameter matches the second verification parameter, generating, by the TNGF, the target key for the target TNAP by using the intermediate key.

4. The method according to claim 1 or 2, wherein before generating, by the TNGF, the target key for the target TNAP by using the intermediate key, the method comprises:
sending, by the TNGF, an authentication request message to the UE through the target TNAP, wherein the authentication request message comprises a first verification parameter and a first freshness parameter, and the first verification parameter is generated by the TNGF based on the root key and the first freshness parameter;
receiving, by the TNGF, an authentication response message from the UE, wherein the authentication response message comprises a second verification parameter and a second freshness parameter; and
obtaining, by the TNGF, a third verification parameter based on the root key and the second freshness parameter; and
generating, by the TNGF, the target key for the target TNAP by using the intermediate key comprises:
when the third verification parameter matches the second verification parameter, generating, by the TNGF, the target key for the target TNAP by using the intermediate key.

5. The method according to claim 1 or 2, wherein after generating, by the TNGF, the target key for the target TNAP by using the intermediate key, and before sending, by the TNGF, the target key to the target TNAP, the method further comprises:
sending, by the TNGF, an authentication request message to the UE through the target TNAP, wherein the authentication request message comprises a first verification parameter and a first freshness parameter, and the first verification parameter is generated by the TNGF based on the intermediate key and the first freshness parameter;
receiving, by the TNGF, an authentication response message from the UE, wherein the authentication response message comprises a second verification parameter and a second freshness parameter; and
obtaining, by the TNGF, a third verification parameter based on the intermediate key and the second freshness parameter; and
sending, by the TNGF, the target key to the target TNAP comprises:
when the third verification parameter matches the second verification parameter, sending, by the TNGF, the target key to the target TNAP.

6. The method according to claim 1 or 2, wherein after generating, by the TNGF, the target key for the target TNAP by using the intermediate key, and before sending, by the TNGF, the target key to the target TNAP, the method further comprises:
sending, by the TNGF, an authentication request message to the UE through the target TNAP, wherein the authentication request message comprises a first verification parameter and a first freshness parameter, and the first verification parameter is generated by the TNGF based on the root key and the first freshness parameter;
receiving, by the TNGF, an authentication response message from the UE, wherein the authentication response message comprises a second verification parameter and a second freshness parameter; and
obtaining, by the TNGF, a third verification parameter based on the root key and the second freshness parameter; and
sending, by the TNGF, the target key to the target TNAP comprises:
when the third verification parameter matches the second verification parameter, sending, by the TNGF, the target key to the target TNAP.

7. The method according to claim 1 or 2, wherein before generating, by the TNGF, the target key for the target TNAP by using the intermediate key, the method further comprises:
sending, by the TNGF, an authentication request message #1 to the UE through the target TNAP, wherein the authentication request message #1 comprises an identifier of the UE;
receiving, by the TNGF, an authentication response message #1 from the UE, wherein the authentication response message #1 comprises a second verification parameter and a second freshness parameter; and
obtaining, by the TNGF, a third verification parameter based on the intermediate key and the second freshness parameter;
generating, by the TNGF, the target key for the target TNAP by using the intermediate key comprises:
when the third verification parameter matches the second verification parameter, generating, by the TNGF, the target key for the target TNAP by using the intermediate key; and
after sending, by the TNGF, the target key to the target TNAP, the method further comprises:
sending, by the TNGF, an authentication request message #2 to the UE through the target TNAP, wherein the authentication request message #2 comprises a first verification parameter and a first freshness parameter, and the first verification parameter is generated by the TNGF based on the intermediate key and the first freshness parameter; and
receiving, by the TNGF, an authentication response message #2 from the UE through the target TNAP, wherein the authentication response message #2 indicates the TNGF to send an authentication success message.

8. The method according to claim 1 or 2, wherein before generating, by the TNGF, the target key for the target TNAP by using the intermediate key, the method further comprises:
sending, by the TNGF, an authentication request message #1 to the UE, wherein the authentication request message #1 comprises an identifier of the UE;
receiving, by the TNGF, an authentication response message #1 from the UE, wherein the authentication response message #1 comprises a second verification parameter and a second freshness parameter; and
obtaining, by the TNGF, a third verification parameter based on the root key and the second freshness parameter;
generating, by the TNGF, the target key for the target TNAP by using the intermediate key comprises:
when the third verification parameter matches the second verification parameter, generating, by the TNGF, the target key for the target TNAP by using the intermediate key; and
after sending, by the TNGF, the target key to the target TNAP, the method further comprises:
sending, by the TNGF, an authentication request message #2 to the UE through the target TNAP, wherein the authentication request message #2 comprises a first verification parameter and a first freshness parameter, and the first verification parameter is generated by the TNGF based on the root key and the first freshness parameter; and
receiving, by the TNGF, an authentication response message #2 from the UE through the target TNAP, wherein the authentication response message #2 indicates the TNGF to send an authentication success message.

9. The method according to any one of claims 1 to 8, wherein generating, by the TNGF, the target key for the target TNAP by using the intermediate key comprises:
generating, by the TNGF, the target key based on a second usage type distinguisher and the intermediate key, wherein the second usage type distinguisher is used to generate the target key.

10. The method according to any one of claims 1 to 9, wherein before generating, by the TNGF, the intermediate key based on the stored root key corresponding to the UE, the method further comprises:
receiving, by the TNGF, a first request message from the target TNAP; and
determining, by the TNGF in response to the first request message, that an authentication procedure between the TNGF and the UE needs to be performed.

11. The method according to claim 10, wherein the TNGF determines, based on the identifier of the UE, that the UE moves from the source TNAP to the target TNAP.

12. The method according to any one of claims 1 to 11, wherein before generating, by the TNGF, the intermediate key based on the stored root key corresponding to the UE, the method further comprises:
determining, by the TNGF, the root key based on the identifier of the UE.

13. An authentication method, wherein the method is applied to a scenario in which a communication apparatus moves from a source trusted non-3rd generation partnership project 3GPP access point TNAP to a target TNAP, and comprises:
generating, by the communication apparatus, an intermediate key based on a root key between the communication apparatus and a trusted non-3GPP gateway function TNGF, wherein the TNGF is a management network element of the source TNAP and the target TNAP; and
generating, by the communication apparatus, a target key for the target TNAP by using the intermediate key, wherein the target key is used to protect communication security between the communication apparatus and the target TNAP.

14. The method according to claim 13, wherein generating, by the communication apparatus, the intermediate key based on the root key between the communication apparatus and the TNGF comprises:
generating, by the communication apparatus, the intermediate key based on a first usage type distinguisher and the root key, wherein the first usage type distinguisher is used to identify the generated intermediate key.

15. The method according to claim 13 or 14, wherein before generating, by the communication apparatus, the intermediate key based on the root key between the communication apparatus and the TNGF, the method comprises:
receiving, by the communication apparatus, an authentication request message from the TNGF through the target TNAP, wherein the authentication request message comprises a first verification parameter and a first freshness parameter, and the first verification parameter is generated by the TNGF based on the intermediate key and the first freshness parameter;
obtaining, by the communication apparatus, a fourth verification parameter by using the intermediate key and the first freshness parameter; and
when the fourth verification parameter matches the first verification parameter, sending, by the communication apparatus, an authentication response message to the TNGF, wherein the authentication response message comprises an identifier of the communication apparatus, a second verification parameter, and a second freshness parameter.

16. The method according to claim 13 or 14, wherein before generating, by the communication apparatus, the intermediate key based on the root key between the communication apparatus and the TNGF, the method comprises:
receiving, by the communication apparatus, an authentication request message from the TNGF through the target TNAP, wherein the authentication request message comprises a first verification parameter and a first freshness parameter, and the first verification parameter is generated by the TNGF based on the root key and the first freshness parameter;
obtaining, by the communication apparatus, a fourth verification parameter by using the root key and the first freshness parameter; and
when the fourth verification parameter matches the first verification parameter, sending, by the communication apparatus, an authentication response message to the TNGF, wherein the authentication response message comprises a second verification parameter and a second freshness parameter.

17. The method according to claim 13 or 14, wherein before generating, by the communication apparatus, the intermediate key based on the root key between the communication apparatus and the TNGF, the method comprises:
receiving, by the communication apparatus, an authentication request message from the TNGF through the target TNAP, wherein the authentication request message comprises a first verification parameter and a first freshness parameter, and the first verification parameter is generated by the TNGF based on the root key and the first freshness parameter; and
obtaining, by the communication apparatus, a fourth verification parameter by using the intermediate key and the first freshness parameter;
generating, by the communication apparatus, the intermediate key based on the root key between the communication apparatus and the TNGF comprises: when the fourth verification parameter matches the first verification parameter, generating, by the communication apparatus, the intermediate key based on the root key between the communication apparatus and the TNGF; and
after generating, by the communication apparatus, the target key for the target TNAP by using the intermediate key, the method further comprises:
sending, by the communication apparatus, an authentication response message to the TNGF, wherein the authentication response message comprises an identifier of the communication apparatus, a second verification parameter, and a second freshness parameter.

18. The method according to claim 13 or 14, wherein before generating, by the communication apparatus, the intermediate key based on the root key between the communication apparatus and the TNGF, the method comprises:
receiving, by the communication apparatus, an authentication request message from the TNGF through the target TNAP, wherein the authentication request message comprises a first verification parameter and a first freshness parameter, and the first verification parameter is generated by the TNGF based on the root key and the first freshness parameter; and
obtaining, by the communication apparatus, a fourth verification parameter by using the root key and the first freshness parameter;
generating, by the communication apparatus, the intermediate key based on the root key between the communication apparatus and the TNGF comprises: when the fourth verification parameter matches the first verification parameter, generating, by the communication apparatus, the intermediate key based on the root key between the communication apparatus and the TNGF; and
after generating, by the communication apparatus, the target key for the target TNAP by using the intermediate key, the method further comprises:
sending, by the communication apparatus, an authentication response message to the TNGF, wherein the authentication response message comprises an identifier of the communication apparatus, a second verification parameter, and a second freshness parameter.

19. The method according to any one of claims 13 to 18, wherein generating, by the communication apparatus, the target key for the target TNAP by using the intermediate key comprises:
generating, by the communication apparatus, the target key based on a second usage type distinguisher and the intermediate key, wherein the second usage type distinguisher is used to identify the generated target key.

20. The method according to claim 19, wherein before generating, by the communication apparatus, the intermediate key based on the root key between the communication apparatus and the TNGF, the method further comprises:
sending, by the communication apparatus, a first request message to the target TNAP.

21. The method according to claim 20, wherein the first request message comprises the identifier of the communication apparatus.

22. The method according to any one of claims 13 to 21, wherein before generating, by the communication apparatus, the intermediate key based on the root key between the communication apparatus and the TNGF, the method further comprises:
determining, by the communication apparatus, the root key based on an identifier of the TNGF.

23. A communication apparatus, wherein the communication apparatus comprises a module configured to perform the authentication method according to any one of claims 1 to 22.

24. A communication apparatus, wherein the communication apparatus comprises a module configured to perform the authentication method according to any one of claims 1 to 12.

25. A communication apparatus, wherein the communication apparatus comprises a module configured to perform the authentication method according to any one of claims 13 to 22.

26. A communication apparatus, wherein the communication apparatus comprises a processor, wherein
the processor is configured to perform the authentication method according to any one of claims 1 to 22.

27. A communication apparatus, comprising a processor and a memory, wherein the memory is configured to store computer instructions, and when the processor executes the instructions, the communication apparatus is enabled to perform the authentication method according to any one of claims 1 to 22.

28. A computer-readable storage medium, wherein the computer-readable storage medium comprises a computer program or instructions, and when the computer program or the instructions are run on a computer, the computer is enabled to perform the authentication method according to any one of claims 1 to 22.

29. A computer program product, wherein the computer program product comprises a computer program or instructions, and when the computer program or the instructions are run on a computer, the computer is enabled to perform the authentication method according to any one of claims 1 to 22.
